(19) Europäisches Patentamt
European Patent Office
Office européen des brevets

(11) **EP 1 751 579 B1**

(12) **EUROPÄISCHE PATENTSCHRIFT**

(45) Veröffentlichungstag und Bekanntmachung des Hinweises auf die Patenterteilung:
**29.06.2016 Patentblatt 2016/26**

(21) Anmeldenummer: **05733483.1**

(22) Anmeldetag: **11.04.2005**

(51) Int Cl.:
***G01S 13/87*** *(2006.01)*

(86) Internationale Anmeldenummer:
**PCT/EP2005/051586**

(87) Internationale Veröffentlichungsnummer:
**WO 2005/119293 (15.12.2005 Gazette 2005/50)**

(54) **VERFAHREN ZUR BESTIMMUNG VON POSITIONSDATEN**

METHOD FOR DETERMINING POSITIONAL DATA

PROCEDE POUR DETERMINER DES DONNEES DE POSITION

(84) Benannte Vertragsstaaten:
**DE FR GB IT SE**

(30) Priorität: **04.06.2004 DE 102004027292**

(43) Veröffentlichungstag der Anmeldung:
**14.02.2007 Patentblatt 2007/07**

(73) Patentinhaber: **Siemens Aktiengesellschaft 80333 München (DE)**

(72) Erfinder:
• **SOLLACHER, Rudolf 84174 Eching (DE)**
• **MALINOVSKIY, Alexey 79539 Lörrach (DE)**

(56) Entgegenhaltungen:
**EP-A- 0 247 949    US-A- 4 583 177
US-A- 5 661 492    US-A- 5 691 922**

• ALBOWICZ J ET AL: "Recursive position estimation in sensor networks", NETWORK PROTOCOLS NINTH INTERNATIONAL CONFERENCE ON ICNP 2001 NOV. 11-14, 2001, PISCATAWAY, NJ, USA,IEEE, 11 November 2001 (2001-11-11), pages 35-41, XP010585440, ISBN: 978-0-7695-1429-1
• CHINTALAPUDI K K ET AL: "Ad-hoc localization using ranging and sectoring", INFOCOM 2004. TWENTY-THIRD ANNUALJOINT CONFERENCE OF THE IEEE COMPUTER AND COMMUNICATIONS SOCIETIES, IEEE, PISCATAWAY, NJ, USA, vol. 4, 7 March 2004 (2004-03-07), pages 2662-2672, XP010740631, DOI: 10.1109/INFCOM.2004.1354685 ISBN: 978-0-7803-8355-5
• SAVVIDES A ET AL: "DYNAMIC FINE-GRAINED LOCALIZATION IN AD-HOC NETWORKS OF SENSORS", PROCEEDINGS OF THE 7TH. ANNUAL INTERNATIONAL CONFERENCE ON MOBILE COMPUTING AND NETWORKING. MOBICOM 2001. ROME, ITALY, JULY 16 - 21, 2001; [ANNUAL INTERNATIONAL CONFERENCE ON MOBILE COMPUTING AND NETWORKING], NEW YORK, NY : ACM, US, vol. CONF. 7, 16 July 2001 (2001-07-16), pages 166-179, XP001072002, DOI: 10.1145/381677.381693 ISBN: 978-1-58113-422-3

EP 1 751 579 B1

**Beschreibung**

Die Erfindung betrifft ein Verfahren zur Bestimmung von Positionsdaten wenigstens eines Knotens eines Netzwerks in einem internen Koordinatensystem sowie ein Verfahren zur Bestimmung von globalen Positionsdaten für wenigstens einen Knoten eines Netzwerks in einem globalen Koordinatensystem.

In vielen technischen Systemen ist es vorteilhaft, die Position von einzelnen Geräten, im Folgenden auch als Knoten bezeichnet, zu kennen und zu verfolgen. Während man im Freien hierfür zum Beispiel GPS verwenden kann, beispielsweise bei der Fahrzeugnavigation, ist man in Gebäuden oder Innenstädten auf andere Verfahren angewiesen. Beispiele für entsprechende Anwendungen oder Systeme sind Feuermeldesensoren in Gebäuden, Sensoren oder Aktuatoren in einer Produktionsanlage, Sensorknoten in einem drahtlosen Sensornetz oder mobile Endgeräte in einem Ad-hoc-Funknetz. Weiterhin ist es vorteilhaft, wenn die Komponenten bzw. Knoten ein Kommunikationsnetz bilden und ihre Position selbständig bestimmen können, ohne eine zentrale Instanz, beispielsweise einen Lokalisierungsserver. Schließlich ist es weiterhin von Vorteil, wenn für die Positionsbestimmung möglichst wenig Infrastruktur vorausgesetzt werden muss, das heißt, dass beispielsweise nur wenige Ankerknoten mit bekannter Position bereitgestellt werden müssen.

Bekannte dezentrale Verfahren zur Positionsbestimmung setzen sog. Ankerknoten voraus, das heißt, Knoten, deren Position immer bekannt ist. Dies erfordert Installationsaufwand und setzt voraus, dass die Positionen der einzelnen Ankerknoten kompatibel sind, das heißt, dass deren Positionen im gleichen Koordinatensystem bekannt sind.

Das einzige bekannte Verfahren, das ohne Ankerknoten auskommt, ist das "GPS Free Positioning System" von Capkun et al., Swiss Federal Institute of Technology, Lausanne. Dieses Verfahren hat jedoch den Nachteil, dass es nur in zwei Dimensionen beschrieben ist, und dass es auf einer lokalen Triangulation beruht und deshalb redundante Information nicht vollständig berücksichtigen kann. Eine rekursive Positionsschätzung von Knoten in Sensornetzwerken mittels nicht-linearer Regression wird beschrieben in "Recursive Position Estimation in Sensor Networks", von Albowicz et al, ICNP, IEEE, 2001.

Der Erfindung liegt die Aufgabe zugrunde, ein Verfahren zur Bestimmung von Positionsdaten bereitzustellen, wobei die Nachteile bekannter Verfahren nicht auftreten.

Die Aufgabe, Positionsdaten zu bestimmen, wird mit den Merkmalen des unabhängigen Anspruchs 1 gelöst. Bevorzugte Ausführungsformen sind unter anderem in den abhängigen Ansprüchen definiert und/oder werden in der weiteren Beschreibung erläutert.

Das Verfahren zur Bestimmung von Positionsdaten wenigstens eines Knotens eines Netzwerks, welches eine Mehrzahl von Knoten umfasst, umfasst die folgenden Schritte:

Schritt a): Bereitstellen von Positionsdaten, wobei sich die Positionsdaten auf ein internes bzw. relatives Koordinatensystem beziehen, für eine Untermenge von Knoten der Mehrzahl von Knoten, wobei der wenigstens eine Knoten nicht in der Untermenge enthalten ist, und wobei die Positionsdaten zumindest die jeweilige, insbesondere geschätzte, Position der Knoten der Untermenge im internen Koordinatensystem beschreiben;

Schritt b): Bestimmung von Entfernungsdaten für den wenigstens einen Knoten, wobei die Entfernungsdaten jeweils ein Maß für die Entfernung zwischen dem wenigstens einen Knoten und den jeweiligen Knoten der Untermenge sind;

Schritt c): Bestimmung oder - bei wiederholtem Durchlaufen des Schrittes c) - Korrektur der Positionsdaten des wenigstens einen Knotens in Abhängigkeit von den im Schritt a) bereitgestellten Positionsdaten der Knoten der Untermenge, den im Schritt b) bestimmten Entfernungsdaten und Positionsdaten des wenigstens einen Knotens, wobei die Positionsdaten des wenigstens einen Knotens beim erstmaligen Durchlaufen des Schrittes c) Initialpositionsdaten und sonst den Positionsdaten des vorherigen Durchlaufs des Schrittes c) entsprechen;

Schritt d): Wiederholen der Schritte a) bis c), solange bis ein Abbruchkriterium erfüllt ist.

Ein Aspekt der Erfindung ist es also, Positionsdaten des wenigstens einen Knotens mittels eines iterativen Verfahrens zu bestimmen. Die Positionsdaten geben insbesondere die Positionsdaten des wenigstens einen Knotens in internen bzw. relativen Koordinaten an. Im ersten Iterationsschritt werden die Positionsdaten des wenigstens einen Knotens dabei in Abhängigkeit von den im Schritt a) bereitgestellten Positionsdaten der Knoten der Untermenge, den in Schritt b) bestimmten Entfernungsdaten, und Initialpositionsdaten bestimmt. Die Initialpositionsdaten können beispielsweise auf Null gesetzt werden, es ist jedoch auch jede andere Wahl möglich. Hinsichtlich der Implementierung des Verfahrens ist es allerdings wichtig, dass es keine numerischen Probleme gibt. Aus diesem Grund sollten die Werte für die Initialpositionsdaten nicht zu groß gewählt werden. Beim wiederholten Durchlauf der Schritte a) bis c) werden dann die Positionsdaten des wenigstens einen Knotens korrigiert, in Abhängigkeit von den im Schritt a) bereitgestellten Positionsdaten der Knoten der Untermenge, den in Schritt b) bestimmten Entfernungsdaten, und den im vorherigen Durchlauf des Schrittes c) bestimmten Positionsdaten des wenigstens einen Knotens.

In einer bevorzugten Ausführungsform weist das Netzwerk ausschließlich mobile Knoten auf, deren Position nicht a priori bekannt ist. Das heißt, das Verfahren ist insbesondere auch bei Netzwerken mit ausschließlich mobilen Knoten anwendbar. Die ermittelten Positionsdaten können in diesem Fall beispielsweise zur Navigation im relativen bzw. internen Koordinatensystem verwendet werden.

Vorteilhafterweise weist die Untermenge von Knoten eine relativ große Anzahl von Knoten auf, insbesondere mehr als drei Knoten. Mit mindestens vier Nachbarknoten, d. h. die Untermenge von Knoten enthält mindestens vier Knoten, kann im Prinzip eine Position eindeutig bestimmt werden. Die Anzahl von Nachbarknoten bzw. die Anzahl von Knoten in der Untermenge von Knoten, zu denen Distanzen gemessen werden können, hängen vom Messverfahren und von der Umgebung ab.

Weiterhin ist es vorteilhaft, wenn die Positionsdaten jedes Knotens der Untermenge folgende Informationen enthalten:

- die Position oder die geschätzte Position des jeweiligen Knotens, wobei die geschätzte Position mit dem Verfahren gemäß einem der vorstehenden Ansprüche bestimmt wird,
- ein Maß für die Unsicherheit der Position oder der geschätzten Position des jeweiligen Knotens, insbesondere eine entsprechende Kovarianzmatrix und/oder
- ein Maß für die Mobilität des jeweiligen Knotens.

Weiterhin ist es vorteilhaft, wenn das Maß für die Mobilität des jeweiligen Knotens eine Diffusionskonstante bzw. Mobilitätskonstante, eine Schätzung des aktuellen Geschwindigkeitsvektors und/oder eine geschätzte Bahntrajektorie ist.

Der Geschwindigkeitsvektor wird z.B. mit Hilfe eines Kalman-Filters aus den Korrekturen der statischen Positionsschätzung durch die Distanzmessungen bestimmt. Die tatsächliche Positionsschätzung ergibt sich dann aus statischer Positionsschätzung plus Korrektur durch den Geschwindigkeitsvektor.

Eine Bahntrajektorie wird aus einer Reihe von aufeinanderfolgenden statischen Positionsschätzungen und gegebenenfalls deren Zeitabständen bestimmt. Geeignete Repräsentationen sind Dichteschätzer dieser Messwertfolgen, wobei sich die geschätzte Position aus der geschätzten letzten Position und Geschwindigkeit sowie dem Erwartungswert der Messwertfolgen ergibt, oder rekurrente Neuronale Netze, die aus den bisherigen Positionen zukünftige Positionen schätzen.

Bevorzugt wird das Maß für die Mobilität des Knotens aus vergangenen Beobachtungen, insbesondere der Bewegungen, des jeweiligen Knotens bestimmt. Zur Bestimmung des Maßes für die Mobilität ist auch die direkte Messung der Geschwindigkeit des Knotens, z. B. durch einen Odometer, möglich.

Weiterhin wird die Entfernung des wenigstens einen Knotens zu Knoten der Untermenge im Schritt b) vorteilhaft mittels Radar oder anhand der Dämpfung eines Funksignals bestimmt. Es ist auch möglich, dass die Entfernung des wenigstens einen Knotens zu Knoten der Untermenge im Schritt b) anhand von Ankunftszeiten bzw. des Time of Arrival bestimmt wird. In diesem Fall erfolgt die Messung der Entfernung beispielsweise mittels Ultraschall.

In diesem Zusammenhang sei erwähnt, dass die Knoten der Untermenge aus den Knoten gebildet werden können, die von dem wenigstens einen Knoten mittels Radar oder eines Funksignals erreicht werden können. Das heißt, es wird überprüft, welche Knoten des Netzwerks von dem wenigstens einen Knoten aus mittels Radar oder Funk erreicht werden können und diese Knoten werden in die Untermenge aufgenommen. Zu diesen Knoten kann gleichzeitig die Entfernung zum wenigstens einen Knoten bestimmt werden.

Das Netzwerk kann insbesondere ein Ad-hoc-Funknetzwerk sein. Die Knoten sind dann mobile Endgeräte und/oder Funkmasten. Im Falle von Location Based Services können beispielsweise die statischen Access-Knoten als Referenzpunkte bzw. Baken oder Ankerknoten verwendet werden. Dies ist insbesondere zur Bestimmung von globalen Positionsdaten von Bedeutung (siehe unten).

Die Entfernung des wenigstens einen Knotens zu Knoten der Untermenge kann für den Fall, dass das Netzwerk ein Ad-hoc-Funknetz ist, anhand einer Hop-Distanz bestimmt werden. Diese Hop-Distanz ist die kleinste Anzahl von Übertragungen, die man braucht, um ein Datenpaket von einem Knoten A über dazwischenliegende Knoten zu einem Knoten B zu senden. Pro Übertragung wird dabei eine typische Übertragungsstrecke angenommen. Daraus lässt sich dann eine Entfernung zwischen Knoten A und Knoten B schätzen.

Die Knoten des Netzwerks können auch Feuermeldesensoren, Sensoren oder Aktuatoren einer Produktionsanlage, einer Klimaanlage oder einer Gebäudeüberwachung, oder Sensorknoten eines drahtlosen Sensornetzes sein.

Vorteilhaft ist es weiterhin, wenn das Verfahren im Wesentlichen für alle Knoten des Netzwerks durchgeführt wird und so Positionsdaten für im Wesentlichen alle Knoten bestimmt werden, wobei zur Bestimmung der Positionsdaten eines bestimmten Knotens jeweils eine eigene Untermenge von Knoten für den bestimmten Knoten bestimmt wird, wobei die Knoten der eigenen Untermenge jeweils ihre Positionsdaten an den bestimmten Knoten übertragen, wobei der bestimmte Knoten die Entfernungsdaten bestimmt, die jeweils die Entfernung des bestimmten Knotens von einem Knoten der eigenen Untermenge beschreiben.

Weiterhin ist es vorteilhaft, wenn die Positionsdaten oder die Position des wenigstens einen Knotens als Zufallsvariable $\overrightarrow{\xi_{i,t}}$ modelliert und mittels des Erwartungswertes $\overrightarrow{\mu_{i,t}}$ dieser Zufallsvariable $\overrightarrow{\xi_{i,t}}$ bestimmt wird.

Bevorzugt wird die Position des wenigstens einen Knotens mittels einer iterativen Berechnung gemäß folgender iterativer Berechnungsvorschrift ermittelt:

$$\vec{\mu}_{i,t}(k+1) = \left[ (A_{i,t-1} + D_{i,t-1})^{-1} + \sum_j (\vec{e}^T_{i,j,t}(k)(A_{j,t-1} + D_{j,t-1} + \sigma_j^2 I)\,\vec{e}_{i,j,t}(k))^{-1} \right]^{-1} \times$$

$$\times \left[ (A_{i,t-1} + D_{i,t-1})^{-1}\vec{\mu}_{i,t-1} + \sum_j (\vec{e}^T_{i,j,t}(k)(A_{j,t-1} + D_{j,t-1} + \sigma_j^2 I)\,\vec{e}_{i,j,t}(k))^{-1} \times \right.$$

$$\left. \times (\vec{\mu}_{j,t-1} + \hat{d}_{i,j,t}\vec{e}_{i,j,t}(k)) \right],$$

mit

$$\vec{e}_{i,j,t}(k) = (\vec{\mu}_{i,t}(k) - \vec{\mu}_{j,t-1})/|\vec{\mu}_{i,t}(k) - \vec{\mu}_{j,t-1}|,$$

- $A_{x,\tau}$: Kovarianzmatrix des Knotens x zum Zeitpunkt $\tau$,
- $D_{x,\tau}$: Diffusionskonstante des Knotens x zum Zeitpunkt $\tau$,
- $\mu_{x,\tau}$: Position des Knotens x zum Zeitpunkt $\tau$,
- $d_{x,y,\tau}$: Gemessene Distanz zwischen Knoten x und Knoten y zum Zeitpunkt $\tau$.

Bevorzugt wird der Startwert der iterativen Berechnungsvorschrift wie folgt gewählt:

$$\vec{\mu}_{i,t}(0) = \vec{\mu}_{i,t-1}.$$

Vorteilhaft ist das Abbruchkriterium erfüllt, falls der Betrag der Veränderungen der Positionsdaten des wenigstens einen Knotens seit der letzten Durchführung der Schritte a) bis c) unterhalb eines vorbestimmten Schwellwerts liegt. Der Schwellwert sollte dabei deutlich kleiner sein als die typische Messungenauigkeit der Distanzmessungen, welche Distanzmessungen zur Bestimmung der Entfernungsdaten durchgeführt werden (siehe oben).

Bevorzugt wird die iterative Berechnung abgebrochen, falls die absolute Positionsveränderung zwischen zwei aufeinander folgenden Iterationsschritten kleiner als ein vorbestimmter Wert $\varepsilon$ ist, so dass gilt:

$$|\vec{\mu}_{i,t}(k+1) - \vec{\mu}_{i,t}(k)| < \varepsilon.$$

Bevorzugt wird die Kovarianzmatrix $A_{i,t}$ mittels folgender Berechnungsvorschrift berechnet:

$$A_{i,t}^{-1} \approx (A_{i,t-1} + D_i)^{-1} + \sum_j \vec{e}_{i,j,t}\,\vec{e}^T_{i,j,t}\,(\vec{e}^T_{i,j,t}(A_{j,t-1} + D_j + \sigma_j^2 I)\,\vec{e}_{i,j,t})^{-1},$$

mit

$\vec{e}_{i,j,t}$ :  Einheitsvektor in Richtung der Verbindungslinie von Knoten *j* nach Knoten *i*,
$\sigma_j$ :  Standardabweichung der Distanzmessung zu Knoten j,
*I* :  Identitätsmatrix.

Bevorzugt wird die Diffusionskonstante $D_{x,\tau}$ proportional zur Geschwindigkeit gewählt, wobei sich der Knoten *x* mit dieser Geschwindigkeit bewegt. Je größer die Diffusionskonstante ist, desto stärker wird die Positionsschätzung durch die Distanzmessungen beeinflusst. Dies reduziert beispielsweise den Einfluss falscher Positionsschätzungen für mobile Knoten, da in der ursprünglichen Version angenommen wird, dass die Knoten statisch sind. Ähnliches gilt auch, wenn der Geschwindigkeitsvektor geschätzt wird.

Vorteilhaft ist es weiterhin, wenn die Diffusionskonstante $D_{x,\tau}$ mittels folgender Berechnungsvorschrift bestimmt wird:

$$D_{i,t} = |\vec{v}_{i,t}\Delta t|^2 I,$$

mit

$$\vec{v}_{i,t} = \vec{v}_{i,t-1} + \kappa\left(\frac{\vec{\xi}_{i,t} - \vec{\xi}_{i,t-1}}{\Delta t} - \vec{v}_{i,t-1}\right),$$

$\kappa$: Smoothness-Faktor,
$\Delta t$: Zeitintervall zwischen den Zeitpunkten t-1 und t,
$\vec{v}_{x,\tau}$: intrinsische Geschwindigkeit des Knotens x zum Zeitpunkt $\tau$,
$I$: Identitätsmatrix.

Hinsichtlich des Smoothness-Faktor $\kappa$ gilt, dass der Einfluss von Messrauschen geringer ist, je kleiner der Smoothness-Faktor $\kappa$ ist. Jedoch reagiert die Schätzung um so träger bzw. langsamer je kleiner $\kappa$ ist. Vernünftige Werte für den Smoothness-Faktor $\kappa$ sollten nicht wesentlich größer sein als 0,1.

Das Verfahren zur Bestimmung von globalen bzw. externen oder absoluten Positionsdaten für wenigstens einen Knoten oder für alle Knoten eines Netzwerks, welches eine Mehrzahl von Knoten umfasst, wobei sich die globalen Positionsdaten auf ein globales bzw. externes Koordinatensystem beziehen, umfasst die folgenden Schritte: Bestimmen von relativen Positionsdaten gemäß dem oben definierten verfahren für den wenigstens einen Knoten und/oder für im Wesentlichen alle Knoten des Netzwerks, und Bestimmen der globalen Positionsdaten in Abhängigkeit von den relativen Positionsdaten mittels einer Transformation.

Ein Aspekt des Verfahrens zur Bestimmung von globalen Positionsdaten ist es also, zunächst das oben definierte Verfahren zur Bestimmung von Positionsdaten des wenigstens einen Knotens und/oder für im Wesentlichen alle Knoten des Netzwerks durchzuführen, um so die Positionsdaten des wenigstens einen Knotens oder im Wesentlichen aller Knoten des Netzwerks im internen bzw. relativen Koordinatensystem zu bestimmen, und anschließend eine Transformation anzuwenden, die aus den Positionsdaten der Knoten im relativen Koordinatensystem globale Positionsdaten bestimmt.

Vorteilhaft ist es, wenn die Transformation mittels eines linearen Regressionsansatzes bestimmt wird, in Abhängigkeit von einer Mehrzahl von Positionspaaren, wobei ein Positionspaar jeweils Positionsdaten eines Knotens gemäß dem internen Koordinatensystem und globalen Positionsdaten desselben Knotens gemäß dem globalen Koordinatensystem zur selben Zeit umfasst. Als Transformation kann auch eine zeitabhängige Transformation verwendet werden.

Vorteilhaft ist es, wenn die Positionspaare durch Ankerknoten permanent zur Verfügung stehen. Wie oben kann das Netzwerk beispielsweise ein Ad-hoc-Funknetz und die Knoten können mobile Endgeräte sein. In diesem Fall können die Ankerknoten beispielsweise Access-Knoten sein. Access-Knoten ermöglichen beispielsweise den Zugang in ein anderes Netz, z. B. in das Internet. Als Ankerknoten bieten sich alle fest installierten Knoten an, z. B. Router in Mesh-Networks, Aktuatoren, beispielsweise Heizungsregler, in Gebäuden und Anlagen.

Wie oben bereits erwähnt, können die Knoten beispielsweise auch Feuermeldesensoren, Sensoren oder Aktuatoren einer Produktionsanlage oder Sensorknoten eines drahtlosen Sensornetzes sein.

Vorteilhaft ist es, wenn die Positionspaare durch Positionsmessungen für die jeweiligen Knoten ermittelt werden, wobei die jeweiligen globalen Positionsdaten der jeweiligen Knoten mittels einer Positionsbestimmungseinrichtung, insbesondere einer GPS-Positionsbestimmungseinrichtung, bestimmt werden.

Vorteilhaft ist es weiterhin, wenn die Positionspaare durch Positionsmessungen ermittelt werden, wobei ein mobiler Knoten seine globalen Positionsdaten zu unterschiedlichen Zeitpunkten anhand einer, insbesondere digitalen, Karte bestimmt, und so verschiedene Positionspaare bereitgestellt werden. Beispielsweise kann ein Roboter ein mobiler Knoten sein, der seine globale Position anhand einer digitalen Karte bestimmt. Die vom Roboter bereitgestellten globalen Positionsdaten können dann zur Bildung der Positionspaare verwendet werden. Es ist auch möglich, dass eine Person ihre globalen Positionsdaten anhand einer externen Karte bestimmt. Die globalen Positionsdaten der Person können dann zur Bestimmung der Positionspaare verwendet werden. Wichtig ist, dass der Roboter oder die Person die jeweiligen globalen Positionsdaten zu unterschiedlichen Zeitpunkten und/oder an unterschiedlichen Orten bereitstellen.

Bevorzugt werden die globalen Positionsdaten $\vec{x}_{i,t}$ eines oder mehrerer Knoten des Netzwerks mittels folgender Berechnungsvorschrift bestimmt: mit

$$\vec{x}_{i,t} = M_t \vec{\mu}_{i,t} + \vec{b}_t$$

$M_t$: Transformationsmatrix zum Zeitpunkt t,
$\vec{b}_t$: Verschiebungsvektor zum Zeitpunkt t.

Vorteilhafterweise wird die Transformationsmatrix $M_t$ mittels folgender Berechnungsvorschrift bestimmt:

$$M_t = \sum_m (\hat{\vec{x}}_m - <\hat{\vec{x}}_m>) \vec{\mu}_m^T \left( \sum_m (\vec{\mu}_m - <\vec{\mu}_m>) \vec{\mu}_m^T \right)^{-1},$$

mit

$\hat{\vec{x}}_m$ : Globaler Positionsvektor,

$<\hat{\vec{x}}_m>$: Mittelwert über alle globalen Positionsvektoren der Positionspaare,

$<\vec{\mu}_m>$: Mittelwert über alle relativen Positionsvektoren der Positionspaare.

Vorteilhaft ist es weiterhin, wenn der Verschiebungsvektor $\vec{b}_t$ mittels folgender Berechnungsvorschrift bestimmt wird:

$$\vec{b}_t = <\hat{x}_m> - M_t <\vec{\mu}_m> .$$

Vorteilhaft ist es außerdem, wenn mindestens vier Positionspaare bestimmt werden. Im Prinzip können beliebig viele Positionspaare bestimmt werden. Jedoch ist es von Vorteil, wenn die Anzahl von Positionspaaren möglichst klein ist, da der Konfigurationsaufwand oder der Aufwand für die Bereitstellung der Infrastruktur umso größer ist, je mehr Positionspaare bestimmt werden.

Die folgenden Ausführungen können unter Umständen zum Verständnis der Erfindung hilfreich sein:

Das beschriebene Verfahren löst das Positionierungsproblem in einem zweistufigen Verfahren. Die einzelnen Knoten (Geräte) können die Distanz zu benachbarten Knoten bis zu einer bestimmten maximalen Distanz messen, z. B. mit einem Radar, über die Dämpfung eines Funksignals oder in Multi-hop-Funknetzen einfach über die Hop-Distanz. Weiterhin tauschen die Knoten mit ihren Nachbarknoten ihre aktuelle geschätzte Position aus. Zusätzlich kann noch ein Maß für die Unsicherheit der Positionsschätzung (Kovarianzmatrix) und für die Mobilität des Knotens ausgetauscht werden. Letztere kann eine Art Mobilitätskonstante (Diffusionskonstante) sein oder eine Schätzung des aktuellen Geschwindigkeitsvektors oder eine geschätzte Bahntrajektorie, die aus vergangenen Beobachtungen gelernt wurde (z. B. als Folge von Paaren {Position, Zeitdifferenz}). Aus den aktuellen Distanzmessungen zu den Nachbarknoten und den geschätzten Positionen der Nachbarn zum Zeitpunkt der jeweiligen Distanzmessung bestimmt jeder Knoten eine Korrektur seiner eigenen Position, der entsprechenden Unsicherheit und gegebenenfalls seiner Mobilitätskonstante oder seines Geschwindigkeitsvektors oder seiner geschätzten Trajektorien. Die geänderten Werte teilt er seinen Nachbarknoten mit. Auf diese Weise bildet sich ein mit den Distanzmessungen kompatibles Koordinatensystem im Netz aus. Um dieses interne bzw. relative Koordinatensystem mit dem einer externen Karte zu synchronisieren, wird eine Transformation zwischen diesen beiden Koordinatensystemen gelernt. Diese Transformation kann im Allgemeinen eine Translation, eine Rotation, eine Spiegelung und eine Skalierung beinhalten. Die Parameter der Transformation werden mit einem linearen Regressionsansatz aus einer Reihe von Positionsangaben in jeweils internen (relativen) und externen (globalen/absoluten) Koordinaten bestimmt. Diese Positionsangaben können, wie bei anderen Verfahren auch, durch Ankerpunkte permanent zur Verfügung gestellt werden. Alternativ reichen aber auch eine Mehrzahl unabhängiger Positionsmessungen eines einzigen mobilen Knotens, wenn nicht zu viele Knoten mobil sind beziehungsweise wenn die Knoten ihre Trajektorien hinreichend gut vorhersagen können. In diesen Fällen bleibt die Positionierung auch über längere Zeit ohne erneutes Nachtraining der Transformation akkurat. Die Transformation kann im Netz verteilt werden und so anderen Teilnehmern zur Verfügung gestellt werden.

Das Verfahren benötigt neben Messwerten der Distanzen zu Nachbarknoten im einfachsten Fall nur noch die geschätzten Positionen der Nachbarknoten, die von diesen übermittelt werden. Das Verfahren konvergiert sehr schnell auf ein zu den Distanzmessungen kompatibles internes Koordinatensystem im Netz. Das Verfahren ist robust gegen den Ausfall einzelner Knoten, solange dadurch die Anzahl der Nachbarn eines Knotens nicht zu gering wird oder das Netz partitioniert. Durch eine Abschätzung von Geschwindigkeitsvektoren und vor allem durch eine Vorhersage der Trajektorien kann die Frequenz der Distanzmessungen deutlich reduziert werden; in einem autonomen Sensornetz ohne externen Stromversorgung kann so der Datenverkehr und der Energieverbrauch deutlich reduziert und damit die Lebensdauer des Sensornetzes deutlich erhöht werden. Die Synchronisation mit einer externen Karte kann über nur einen mobilen Knoten erfolgen; dies kann eine Person oder ein Roboter mit einem entsprechenden Gerät sein, die/der auch ihre/seine Position auf einer externen Karte bestimmen können (z. B. durch Anklicken eines Punktes auf einer digitalen Karte oder durch ein Navigationssystem).

weitere Merkmale und Ausführungsformen der vorliegenden Erfindung werden aus der nachfolgenden Beschreibung einer bevorzugten Ausführungsform mit Bezug auf die Zeichnungen ersichtlich. Es zeigen:

Fig. 1-7    Ergebnisse von Simulationen des Verfahrens zur Bestimmung von Positionsdaten im internen Koordinatensystem und des Verfahrens zur Bestimmung von globalen Positionsdaten und

Fig. 8    ein Beispiel für ein Netzwerk mit Knoten.

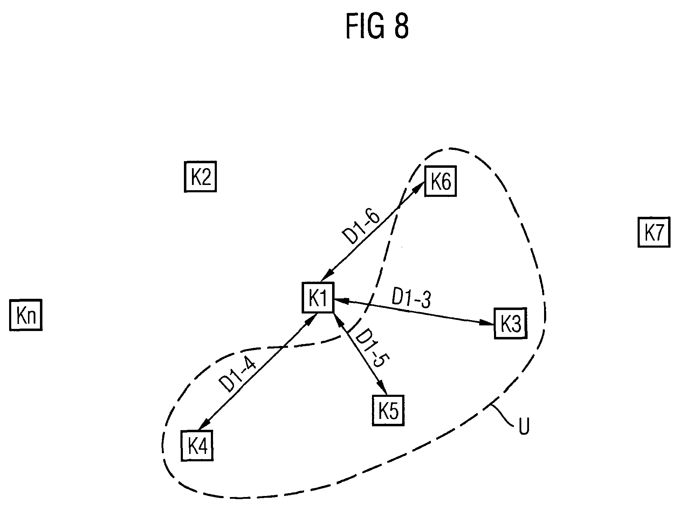

Fig. 8 zeigt ein Netzwerk N mit Knoten K1, ... Kn. Zur Bestimmung von Positionsdaten wenigstens eines Knotens, hier des Knotens K1, des Netzwerks N, werden in einem Schritt a) zunächst die Positionsdaten einer Untermenge U von Knoten K3, ..., K6 der Knoten K1, ..., Kn bereitgestellt. Das heißt, die Knoten K3, K4, K5 und K6 übertragen ihre Positionsdaten an den Knoten K1. Falls nicht anders angegeben, sind mit Positionsdaten immer Positionsdaten eines internen bzw. relativen Koordinatensystems gemeint.

Das Netzwerk kann beispielsweise ein Ad-hoc-Funknetz sein. In diesem Fall sind die Knoten mobile Endgeräte. Die Knoten können aber auch Feuermeldesensoren, Sensoren oder Aktuatoren einer Produktionsanlage oder Sensorknoten eines drahtlosen Sensornetzes sein.

Im folgenden Schritt b) bestimmt der Knoten K1 mittels Radar Entfernungsdaten D1-3, D1-4, D1-5 und D1-6, im Folgenden abgekürzt mit D1-3, ..., D1-6. Die Entfernungsdaten D1-3, ..., D1-6 sind jeweils ein Maß für die Entfernung zwischen dem Knoten K1 und den Knoten der Untermenge U, d. h. den Knoten K3, K4, K5 und K6.

Im folgenden Schritt c) bestimmt der Knoten K1 seine Positionsdaten bzw. korrigiert diese. Dabei werden die im Schritt a) bereitgestellten Positionsdaten der Knoten K3, ..., K6 der Untermenge U, die im Schritt b) bestimmten Entfernungsdaten D1-3, ..., D1-6 und die Positionsdaten des Knotens K1 des vorherigen Durchlaufs des Schrittes c) verwendet.

Anschließend werden die Schritte a) bis c) so lange wiederholt, bis ein Abbruchkriterium erfüllt ist.

Das Verfahren kann entweder hintereinander oder abwechselnd für jeden Knoten K1, ..., Kn des Netzwerks N durchgeführt werden. Somit werden für jeden Knoten K1, ..., Kn des Netzwerks N Positionsdaten im internen bzw. relativen Koordinatensystem bestimmt.

Die Positionsdaten werden anschließend mittels einer Transformation in globale Positionsdaten umgerechnet. Dies ermöglicht eine Abbildung des internen Koordinatensystems auf ein globales Koordinatensystem, beispielsweise zur Abbildung der Knoten K1, ..., Kn auf einer Karte.

Für das Verfahren zur Bestimmung von Positionsdaten im relativen Koordinatensystem und im globalen Koordinatensystem sind keine permanent zur Verfügung stehenden Ankerknoten notwendig. Es müssen lediglich lokale Zwischenknoten-Distanzmessungen durchgeführt werden und die gemessenen Entfernungen ausgetauscht werden. Somit können die Positionsdaten im relativen Koordinatensystem bestimmt werden. Anschließend reichen einige wenige Eingaben von absoluten Positionen aus, um die Transformation in ein absolutes Koordinatensystem zu ermöglichen. Um die Performanz des Verfahrens weiter zu erhöhen, wird die Mobilität der Knoten mit in die Berechnung einbezogen.

Im Folgenden wird zunächst das verfahren zur Bestimmung der Positionsdaten gemäß dem relativen Koordinatensystem beschrieben, welches insbesondere auf lokalen Zwischenknoten-Distanzmessungen beruht, d. h. auf lokalen Messungen zur Bestimmung des Abstands von jeweils zwei Knoten. Der Abstand zwischen zwei Knoten wird im Folgenden auch mit Zwischenknotenabstand bezeichnet.

Im folgenden bezeichnet $\hat{d}_{i,j,t}$ den Abstand zwischen den Knoten $i$ und $j$ zum Zeitpunkt $t$, der beispielsweise mittels Radar, empfangender Leistung eines Funksignals oder im Falle eines Ad-hoc-Funknetzes mittels der Hop-Distanz bestimmt wird. Dabei ist $t$ ein diskreter Zeitindex. $\vec{\xi}_{i,t}$ bezeichnet den Koordinatenvektor des Knotens $i$ zum Zeitpunkt $t$ im relativen Koordinatensystem, d. h. einem Netzwerk intrinsischen Koordinatensystems. $\vec{\xi}_{i,t}$ ist eine Zufallsvariable. Der statistische Erwartungswert von $\vec{\xi}_{i,t}$ wird mit $\vec{\mu}_{i,t}$ bezeichnet. Das Ziel des Verfahrens ist es, $\vec{\mu}_{i,t}$ in relativen Koordinaten zu bestimmen, d. h. $\vec{\mu}_{i,t}$ sind in einer Ausführungsform die zu bestimmenden Positionsdaten im relativen Koordinatensystem.

$\vec{\mu}_{i,t}$ kann bestimmt werden, indem das Maximum-Likelihood-Kriterium auf die bedingte Wahrscheinlichkeit $P(\vec{\xi}_{i,t} | \{\hat{d}_{i,j,t}\}, \hat{d}^{(t-1)})$ angewandt wird. Dabei bezeichnet $\hat{d}^{(t-1)} = \{\{\hat{d}_{i,j,t-1}\}, ..., \{\hat{d}_{i,j,1}\}\}$ die Geschichte bzw. Vergangenheit von allen Entfernungsmessungen zur Bestimmung der Zwischenknotenabstände zwischen allen möglichen Knotenpaaren. Unter Verwendung der Bayes-Formel für bedingte Wahrscheinlichkeit kann obige bedingte Wahrscheinlichkeit wie folgt beschrieben werden:

$$P(\vec{\xi}_{i,t} | \{\hat{d}_{i,j,t}\}, \hat{d}^{(t-1)}) = c\, P(\{\hat{d}_{i,j,t}\} | \vec{\xi}_{i,t}, \hat{d}^{(t-1)})\, P(\vec{\xi}_{i,t} | \hat{d}^{(t-1)}) \,, \qquad (1)$$

wobei $c$ eine Normalisierungskonstante ist.

In Gleichung (1) entspricht der Term $P(\{\hat{d}_{i,j,t}\} | \vec{\xi}_{i,t}, \hat{d}^{(t-1)})$ der Korrektur durch die aktuellen Messungen und der Term $P(\vec{\xi}_{i,t} | \hat{d}^{(t-1)})$ der Prognose der geschätzten Position bzw. der geschätzten Positionsdaten des Knotens $i$, wobei nur die vergangenen Entfernungsmessungen berücksichtigt werden.

Es werden nun folgende Annahmen getroffen:

(i) Es wird angenommen, dass $P(\vec{\xi}_{i,t} | \{\hat{d}_{i,j,t}\}, d^{(t-1)}) = N(\vec{\xi}_{i,t} | \vec{\mu}_{i,t}, A_{i,t})$ eine Normalverteilung mit Mittelwert $\vec{\mu}_{i,t}$ und Kovarianzmatrix $A_{i,t}$ ist.

(ii) Die Mobilität der Knoten wird als Zufallsprozess gemäß der Monte-Carlo-Methode bzw. als Zufallsbewegung (englisch: random walk process) modelliert, wobei die Zufallsbewegung durch eine normal verteilte Übergangswahrscheinlichkeit mit Mobilitätskovarianz bzw. Mobilitätskovarianzmatrix $D_{i,t}$ modelliert wird.

(iii) Es wird angenommen, dass die Entfernungsmessungen zwischen Knoten $i$ und allen seinen Nachbarn $\{j\}$, d. h. den Knoten der Untermenge voneinander statistisch unabhängig und normal verteilt sind. Da für die neue Position von Nachbarknoten eine verzögerte Information erwartet wird, ist der Mittelwert dieser Normalverteilungen gleich $|\vec{\xi}_{i,t} - \vec{\mu}_{j,t-1}|$, wobei die Kovarianz für diese Verteilungen die Summe der Kovarianzmatrix der vorangehenden Position von Knoten $j$, seiner Mobilitätskovarianz bzw. Mobilitätskovarianzmatrix und der Fehler der Entfernungsmessung ist, die jeweils auf die Verbindungslinie, die die Knoten $i$ und $j$ verbindet, projiziert werden. "Projektion" bedeutet, dass die Kovarianzmatrix auf die durch den Verbindungsvektor aufgespannte Linie projiziert wird.

(iv) Für die bedingte Wahrscheinlichkeit $P(\vec{\xi}_{i,t} | \hat{d}^{(t-1)})$, im Folgenden auch als vergangenheitsbedingte Wahrscheinlichkeit (vgl. oben) wird ebenfalls eine normale Verteilung angenommen. Der Mittelwert der vergangenheitsbedingten Wahrscheinlichkeit entspricht dabei dem vorherigen Erwartungswert $\mu_{i,t-1}$ von $\vec{\xi}_{i,t-1}$. In Übereinstimmung mit den Annahmen (i) und (ii) ist die entsprechende Kovarianzmatrix die Summe von $A_{i,t-1}$ und der Mobilitätskovarianz $D_{i,t}$.

Mit diesen Annahmen ergibt sich:

$$N(\vec{\xi}_{i,t} | \vec{\mu}_{i,t}, A_{i,t}) = \prod_j N(\hat{d}_{i,j,t} | |\vec{\xi}_{i,t} - \vec{\mu}_{j,t-1}|, \vec{e}_{i,j,t}^T (A_{j,t-1} + D_{j,t-1} + \sigma_j^2 I)\, \vec{e}_{i,j,t}) \times$$
$$\times N(\vec{\xi}_{i,t} | \vec{\mu}_{i,t-1}, A_{i,t-1} + D_{i,t-1}), \qquad (2)$$

mit:

$I$ : dreidimensionale Identitätsmatrix,
$\vec{e}_{i,j,t}$ : Einheitsvektor in Richtung der Verbindungslinie von Knoten $j$ nach Knoten $i$.

Für den Einheitsvektor gilt:

$$\vec{e}_{i,j,t} = (\vec{\mu}_{i,t} - \vec{\mu}_{j,t-1}) / |\vec{\mu}_{i,t} - \vec{\mu}_{j,t-1}| . \qquad (3)$$

Das Maximum-Likelihood-Kriterium führt zu

$$\nabla_{\vec{\xi}_{i,t}} P(\vec{\xi}_{i,t} \mid \{\hat{d}_{i,j,t}\}) \big|_{\vec{\mu}_{i,t}} = 0 \tag{4}$$

Aus den Gleichungen (1), (2), (3) und (4) ergibt sich:

$$\sum_j (\hat{d}_{i,j,t} - \mid \vec{\mu}_{i,t} - \vec{\mu}_{j,t-1} \mid) \vec{e}_{i,j,t} \; (\vec{e}_{i,j,t}^T (A_{j,t-1} + D_{j,t-1} + \sigma_j^2 I) \vec{e}_{i,j,t})^{-1} \approx 0. \tag{5}$$

Gleichung (5) kann iterativ gelöst werden. Dabei ist eine iterative Berechnung mit folgender iterativer Berechnungsvorschrift besonders vorteilhaft:

$$\vec{\mu}_{i,t}(k+1) = \left[ (A_{i,t-1} + D_{i,t-1})^{-1} + \sum_j (\vec{e}_{i,j,t}^T(k)(A_{j,t-1} + D_{j,t-1} + \sigma_j^2 I)\vec{e}_{i,j,t}(k))^{-1} \right]^{-1} \times$$
$$\times \left[ (A_{i,t-1} + D_{i,t-1})^{-1}\vec{\mu}_{i,t-1} + \sum_j (\vec{e}_{i,j,t}^T(k)(A_{j,t-1} + D_{j,t-1} + \sigma_j^2 I)\vec{e}_{i,j,t}(k))^{-1} \times \right.$$
$$\left. \times (\vec{\mu}_{i,t-1} + \hat{d}_{i,j,t}\vec{e}_{i,j,t}(k)) \right], \tag{6}$$

mit:

$$\vec{e}_{i,j,t}(k) = (\vec{\mu}_{i,t}(k) - \vec{\mu}_{j,t-1})/\mid \vec{\mu}_{i,t}(k) - \vec{\mu}_{j,t-1} \mid. \tag{7}$$

Die iterative Berechnung kann mit der Schätzung der Position des vorherigen Zeitschritts begonnen werden:

$$\vec{\mu}_{i,t}(0) = \vec{\mu}_{i,t-1}. \tag{8}$$

Die iterative Berechnung wird abgebrochen, wenn die absolute Positionsveränderung von einem zum folgenden Iterationsschritt unterhalb eines bestimmten Schwellwerts liegt:

$$\mid \vec{\mu}_{i,t}(k+1) - \vec{\mu}_{i,t}(k) \mid < \varepsilon. \tag{9}$$

Ganz zu Beginn der iterativen Berechnung sind die relativen Positionsschätzungen sehr ungenau. In diesem Stadium ist eine Konvergenz hinsichtlich einer hohen Genauigkeit der Positionsschätzung nicht notwendig; daher, und um die Verarbeitungszeit zu begrenzen, wird ein strenger oberer Grenzwert für die Anzahl von Iterationsschritten festgelegt. Beispielsweise können 100 Iterationsschritte als strenger oberer Grenzwert festgelegt werden. Nachdem die Positionsschätzungen sich verbessern, verliert dieser Grenzwert seine Relevanz, da er nie erreicht wird. Einige wenige Iterationsschritte reichen dann bereits aus.

Ähnlich wie oben kann die Kovarianzmatrix $A_{i,t}$ bestimmt werden zu:

$$\nabla^2_{\vec{\xi}_{i,t}} P(\vec{\xi}_{i,t} \mid \{\hat{d}_{i,j,t}\}) \big|_{\vec{\mu}_{i,t}} = -A_{i,t}^{-1}. \tag{10}$$

Für die Aktualisierung von $A_{i,t}$ ergibt sich somit folgende Aktualisierungsgleichung:

$$A_{i,t}^{-1} \approx (A_{i,t-1} + D_i)^{-1} + \sum_j \vec{e}_{i,j,t} \, \vec{e}_{i,j,t}^T \; (\vec{e}_{i,j,t}^T (A_{j,t-1} + D_j + \sigma_j^2 I) \vec{e}_{i,j,t})^{-1}. \tag{11}$$

Die Gleichung (6) und Gleichung (11), im Folgenden als erste Aktualisierungsgleichung und zweite Aktualisierungsgleichung bezeichnet, ermöglichen eine gemeinschaftliche relative Positionsbestimmung bzw. Positionsschätzung für den Knoten *i*. Der Startwert für $\vec{\mu}_{i,t=0}$ wird zufällig gewählt, und der Startwert für $A_{i,t=0}$ wird groß genug gewählt, so dass die zugehörige Verteilung den erwarteten Bereich der Knotenkonfiguration abdeckt. In der Regel kennt man den erwarteten Bereich bzw. das Areal, in welchem sich die Knoten befinden. Die Ausdehnung dieses Areals kann als Startwert für die Kovarianzmatrix A verwendet werden.

Absolute Positionsschätzung

Für viele praktische Anwendungen ist es unerlässlich, die Koordinaten der Knoten in einem bestimmten konventionellen absoluten Koordinatensystem zu kennen. Die relativen Koordinaten der Knoten im relativen Koordinatensystem werden dabei vorausgesetzt. Falls zusätzlich die absoluten Koordinaten einiger Knoten bekannt sind, ist es möglich, eine Transformation des relativen Koordinatensystems in das absolute Koordinatensystem zu bestimmen. Im Folgenden wird eine Ausführungsform des Verfahrens zur Bestimmung von globalen Positionsdaten beschrieben.

Folgende Gleichung beschreibt eine allgemeine Transformation der relativen Koordinaten $\vec{\mu}_{i,t}$ in absolute Koordinaten $\vec{x}_{i,t}$:

$$\vec{x}_{i,t} = M_t \vec{\mu}_{i,t} + \vec{b}_t, \qquad (13)$$

mit

$M_t$:   Transformationsmatrix zum Zeitpunkt t,
$\vec{b}_t$:   Verschiebungsvektor.

Diese Transformation ist global und für alle Knoten gültig. Allerdings ist eine Veränderung der Transformation über die Zeit im Allgemeinen möglich. Wenn die absoluten Positionen $\vec{x}_m$ extern bereitgestellt werden, beispielsweise mittels einer GPS-Positionsbestimmung, und die entsprechenden relativen Positionen $\vec{\mu}_m$ bekannt sind, kann die Transformation $(M_t, \vec{b}_t)$ wie im Folgenden bestimmt werden.

Zur Bestimmung der Transformation $(M_t, \vec{b}_t)$ wird die quadratische Fehlerfunktion

$$E_t = \sum_m (\hat{\vec{x}}_m - M_t \vec{\mu}_m - \vec{b}_t)^2 \qquad (14)$$

minimiert. Die beste Transformation $(M_t, \vec{b}_t)$ entspricht dem Minimum von $E_t$. Die notwendigen Bedingungen sind:

$$\nabla_{M_t} E_t = 0, \qquad (15)$$

$$\nabla_{\vec{b}_t} E_t = 0. \qquad (16)$$

Die Lösung der Gleichung (15) und Gleichung (16) zusammen mit der Fehlerfunktion (14) ergeben:

$$M_t = \sum_m (\hat{\vec{x}}_m - <\hat{\vec{x}}_m>) \, \vec{\mu}_m^T \left( \sum_m (\vec{\mu}_m - <\vec{\mu}_m>) \, \vec{\mu}_m^T \right)^{-1}, \qquad (17)$$

$$\vec{b}_t = <\hat{\vec{x}}_m> - M_t <\vec{\mu}_m>, \qquad (18)$$

wobei die spitzen Klammern jeweils den Mittelwert bezeichnen. Gleichungen (17) und (18) legen die gewünschte Transformation fest. Um das Gleichungssystem eindeutig aufzulösen, sind wenigstens vier linear unabhängige absolute

Positionen $\vec{x}_m$ nötig.

Falls sich die Transformation langsam verändert, so muss die Transformation $(M_t, \vec{b}_t)$ nur selten neu berechnet werden. Falls die Transformation in einer Näherung stationär ist, können die absoluten Positionen $\vec{x}_m$ zu unterschiedlichen Zeitpunkten bestimmt werden. Dies können auch die absoluten Positionsmessungen bzw. Positionsbestimmungen eines einzelnen sich bewegenden Knotens sein. Das heißt, es ist ausreichend, wenn nur für einen einzelnen sich bewegenden Knoten die absolute Position zu unterschiedlichen Zeitpunkten bestimmt wird. Bei der Stabilisierung der Transformation ist die Berücksichtigung der Knotengeschwindigkeiten hilfreich, die im Folgenden beschrieben wird.

Verbesserung durch Berücksichtigung der Knotenmobilität

Im einfachsten Fall kann die Mobilitätskovarianzmatrix $D_{i,t}$ für sich langsam bewegende Knoten relativ klein gewählt werden und für sich schnell bewegende Knoten relativ groß. Dieser Ansatz hat zwei positive Effekte. Erstens werden die relativen Koordinatenschätzungen genauer. Zweitens wird die Transformation vom relativen Koordinatensystem in das absolute Koordinatensystem stabiler. Dies trifft zumindest zu, falls nicht zu viele Knoten mobil sind.

Zur Berücksichtigung der Knotenmobilität wird die folgende intrinsische Knotengeschwindigkeit $\vec{v}_{i,t}$ eingeführt:

$$\vec{v}_{i,t} = \vec{v}_{i,t-1} + \kappa\left(\frac{\vec{\xi}_{i,t} - \vec{\xi}_{i,t-1}}{\Delta t} - \vec{v}_{i,t-1}\right), \qquad (19)$$

mit

$\kappa$: Smoothness Faktor
$\Delta t$: Zeitschritt.

Gleichung (19) gibt die Geschwindigkeit der gerichteten Bewegung an, wobei die durch den Fehler bei der Positionsschätzung verursachten Schwankungen nicht berücksichtigt werden. Die Komponenten in der Diagonalen der Kovarianzmatrix $D_{i,t}$ werden gleich dem Quadrat der Entfernungen gesetzt, wobei die Entfernungen in der entsprechenden Richtung im Zeitabschnitt $\Delta t$ zurückgelegt werden:

$$D_{i,t} = |\vec{v}_{i,t} \Delta t|^2 I. \qquad (20)$$

Anhand von Simulationen wurde die Überlegenheit des Verfahrens zur Positionsbestimmung unter Berücksichtigung der Knotenmobilität nachgewiesen.

Simulationsergebnisse

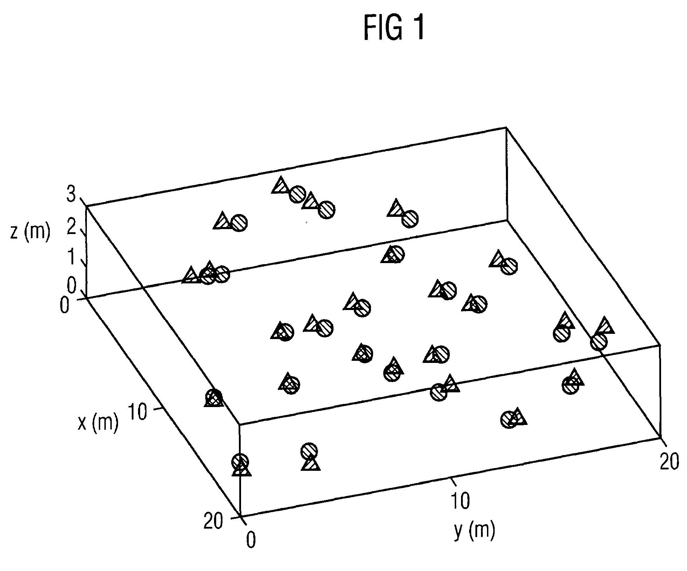

Das Verfahren zur Bestimmung von Positionsdaten bzw. das Verfahren zur Positionsbestimmung wurde anhand des folgenden realistischen Szenarios angewendet. In einem 20 x 20 x 3 m großen Raum werden 25 Knoten zufällig angeordnet, vgl. Fig. 1. Für jeden Knoten werden nun die Entfernungen zu seinen Nachbarknoten bestimmt und für jeden Knoten wird die relative Position alle 0,2 s aktualisiert. Die Zwischenknotenentfernungen und die absoluten Positionen zur Referenz sind ungenau. In beiden Fällen ist der Fehler normal verteilt. Die Standardabweichung für den Fehler der Zwischenknotenentfernung, d. h. der Entfernung zwischen Knoten, wurde auf 0,3 m festgelegt und der Fehler der absoluten Position zur Referenz wurde auf 0,5 m festgelegt.

Die Ziele bei der Simulation waren:

1. die Eingabe der absoluten Position nur für die kleinstmögliche Anzahl von Knoten vorauszusetzen, und

2. die Anzahl von diesen Eingaben für die jeweiligen Knoten so gering wie möglich zu halten.

Daher wurde der folgende Ansatz gewählt. Lediglich der erste Knoten ist ein mobiler Knoten und kann seine absolute Position mittels einer Positionsmessung bzw. Positionsbestimmung bestimmen, wobei die gemessene absolute Position verwendet wird, um die Transformation der relativen Koordinaten in absolute Koordinaten zu bestimmen. Alle anderen Knoten sind stationär. Der erste Knoten bewegt sich mit einer konstanten Geschwindigkeit von 1 m/s hintereinander zu jedem der anderen Knoten. An einem Knoten hält der Knoten für 10 s an, führt die absolute Positionsmessung durch und bewegt sich zum nächsten Knoten. Dieses Bewegungsschema des ersten Knotens ist keine Voraussetzung, jedoch sehr effektiv. Die Simulation entspricht 240 s Realzeit.

Es wurden die folgenden Simulationsparameter verwendet:

σ = 0,3 m (vgl. Gleichung (6) und Gleichung (11)),

ε = 0,02 m (vgl. Gleichung (9)),

κ = 0,1 (vgl. Gleichung (19)).

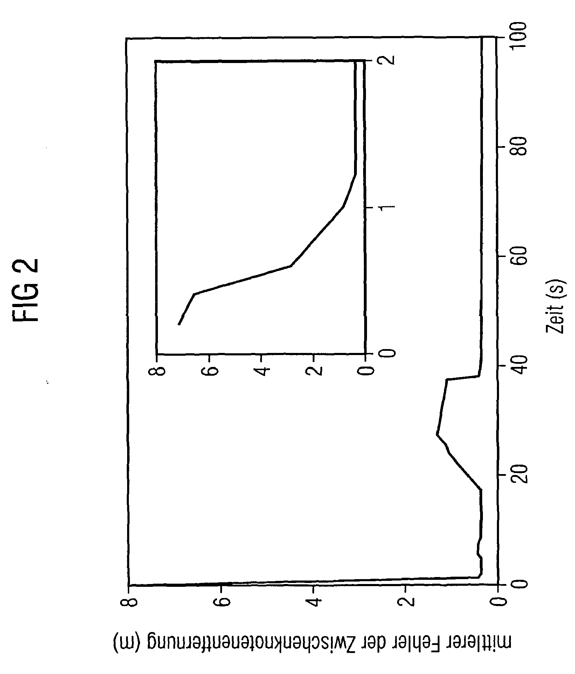

Die Simulationen haben gezeigt, dass das verfahren zur Bestimmung von Positionsdaten bzw. das Verfahren zur Bestimmung von globalen Positionsdaten unter den obigen beschriebenen schwierigen Bedingungen angewandt werden kann. Um die Bestimmung von relativen Positionsdaten zu bewerten, wurde der mittlere Fehler der Zwischenknotenentfernungen überprüft, der als mittlere Differenz zwischen den gemessenen Zwischenknotenentfernungen und den entsprechenden berechneten Entfernungen der geschätzten Positionen definiert ist. Die Analyse der Dynamik des mittleren Fehlers der Zwischenknotenentfernung in Fig. 2 zeigt, dass das Verfahren zur Bestimmung von relativen Positionsdaten, d. h. das Verfahren zur Bestimmung von Positionsdaten sehr effektiv ist. Es wird erreicht, dass der mittlere Fehler innerhalb einer Zeit von nur 1,2 s unterhalb von 0,4 m liegt oder nach sechs gemeinschaftlichen ausgetauschten Positionsschätzungen.

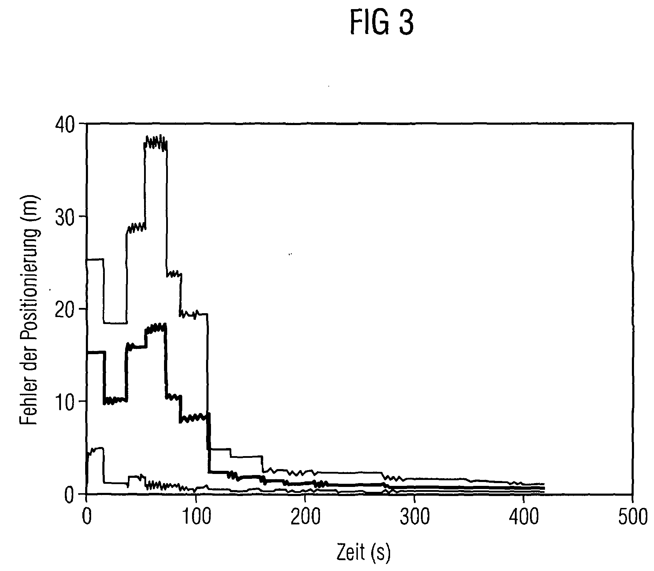

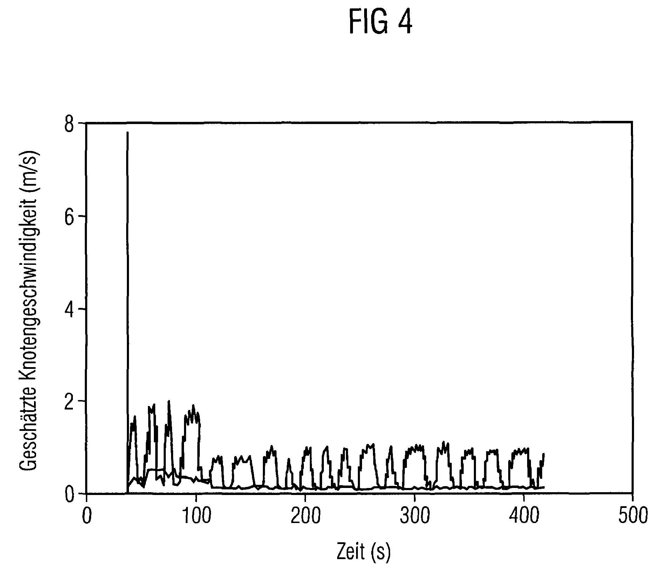

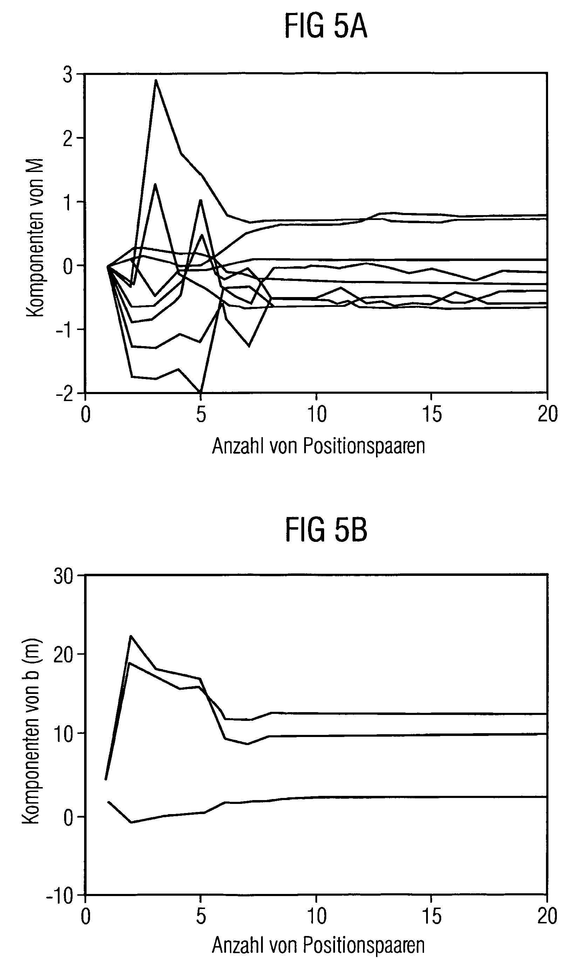

Nach 420 s Realzeit mit nur 20 Eingaben von absoluten bzw. globalen Positionen zur Referenz lag der mittlere Fehler der Positionierung bei 0,52 m, wie in Fig. 1 und 3 zu sehen ist. Bemerkenswert ist, dass sich der maximale Fehler bei der Positionierung dem mittleren Fehler annähert, siehe Fig. 3. Fig. 4 zeigt, dass die Mobilität des ersten Knotens gut erkannt wird. Die Schätzung der Geschwindigkeit wird nach 100 s relativ genau, wenn eine zufriedenstellende gute Knotenkonfiguration bzw. eine gute Anordnung von Knoten mit dem Verfahren bestimmt wurde. Fig. 5 zeigt, dass die Transformation des relativen Koordinatensystems in das absolute Koordinatensystem stabil wird, wenn die Anzahl von absoluten Positionen zur Referenz zur Bestimmung der Transformation acht erreicht hat.

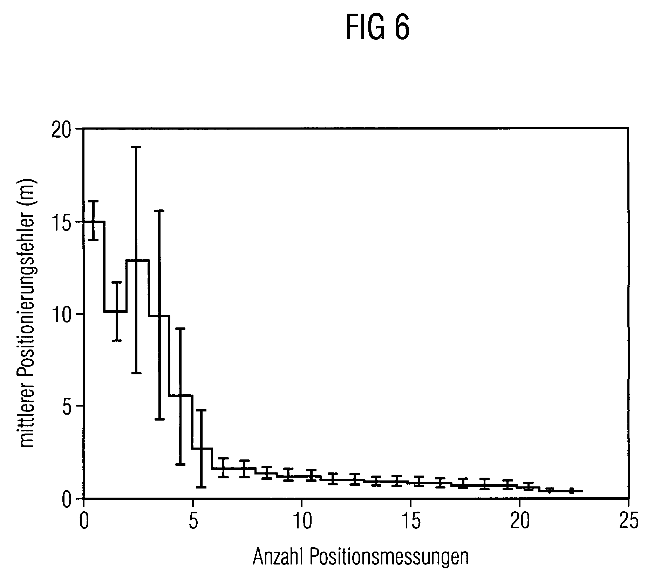

Das Verfahren zur Bestimmung von Positionsdaten bzw. das Verfahren zur Bestimmung von absoluten Positionsdaten wurde auch anhand verschiedener räumlicher Anordnungen der Knoten getestet. Fig. 6 zeigt den mittleren Fehler der absoluten Positionsbestimmung in Abhängigkeit von der Anzahl von absoluten Positionen zur Referenz. In der Statistik werden 10 verschiedene Knotenanordnungen bzw. Knotenkonfigurationen abgedeckt. Dabei ist zu bemerken, dass der Fehler bei der vierten Positionsmessung am stärksten abfällt. Dies entspricht genau der theoretischen Anforderung von vier absoluten bzw. globalen Positionen zur Referenz, um die Transformation eindeutig zu bestimmen. Bereits mit 10 Positionsmessungen fällt der mittlere Fehler der Positionierung auf 1 m. Weitere 10 Messungen reduzieren den Fehler bis auf etwa 0,5 m. Dieser Wert entspricht der gleichen Größenordnung wie der gewählte Fehler der Zwischenknotenentfernung und dem Fehler der absoluten Position zur Referenz. Es sei darauf hingewiesen, dass die Anzahl von Positionsmessungen bzw. die Anzahl von Messungen bedeutet, dass entsprechende Paare von Positionen in relativen Koordinaten und absoluten Koordinaten bestimmt werden.

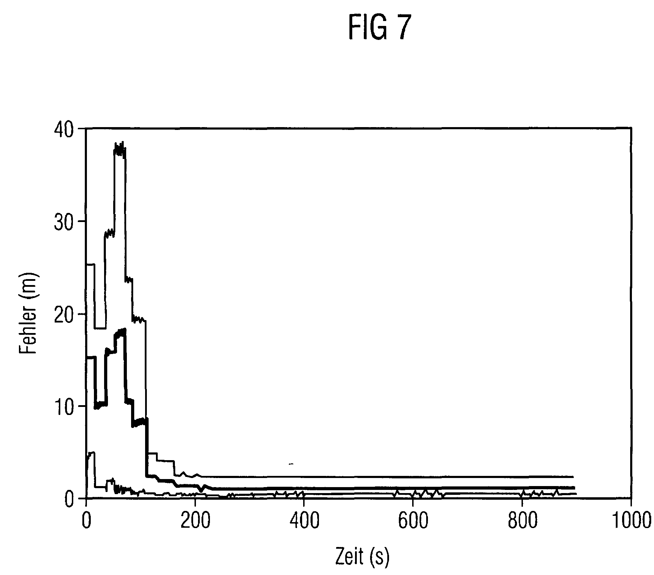

Es wurde auch die Stabilität des Verfahrens für den Fall bestimmt, dass nach einer Aufbauphase (Setup-Phase) keine absoluten Positionsmessungen bestimmt wurden, d. h. es wurden nach der Aufbauphase keine globalen Positionsdaten mehr bestimmt. In den ersten 200 s wurden lediglich 10 absolute Positionsmessungen durchgeführt. Anschließend wurde die Dynamik des freien Systems für 15 Minuten simuliert. Das Ergebnis in Fig. 7 zeigt, dass das Verfahren zur Bestimmung von Positionsdaten weiterhin gute Positionsschätzungen ohne einen bemerkenswerten Abfall in der Genauigkeit liefert.

Es wurden weitere Simulationen durchgeführt, um die Performanz des Verfahrens bei verschiedenen Simulationsszenarien zu untersuchen. Diese enthalten zusätzliche mobile Knoten, sich gelegentlich bewegende Knoten und absolute Positionsmessungen von verschiedenen Knoten. Dabei wurde der Effekt des Fehlers bei der Messung der Zwischenknotenentfernungen und des Fehlers der absoluten Positionsmessungen untersucht. Es konnte bei den Simulationen gezeigt werden, dass das Verfahren für die verschiedenen Simulationsszenarien erfolgreich angewandt werden kann.

Zusammenfassend konnte das Verfahren zur Bestimmung von Positionsdaten bzw. das Verfahren zur Bestimmung von globalen Positionsdaten für das realistische und schwierige Szenario mit einem mobilen Knoten, der gelegentlich seine absolute Position bestimmt, erfolgreich angewendet werden. Für dieses schwierige Simulationsszenario können bekannte Verfahren nicht erfolgreich angewendet werden. Ein großer Vorteil des erfindungsgemäßen Verfahrens ist, dass keine permanent zur Verfügung stehenden Ankerknoten bzw. Baken notwendig sind.

Im Folgenden wird noch einmal zusammengefasst, welche Ergebnisse von Simulationen die Fig. 1 bis 7 zeigen.

Fig. 1 zeigt die Anordnung der genauen Knotenpositionen, dargestellt mit Dreiecken; und die geschätzten Positionen der Knoten, dargestellt mit Punkten, nach einer Simulationszeit von 420 s.

Fig. 2 bezieht sich auf das relative Koordinatensystem und zeigt die Dynamik des mittleren Fehlers der Zwischenknotenentfernung.

Fig. 3 bezieht sich auf das externe bzw. globale Koordinatensystem und zeigt die Dynamik des mittleren Positionierungsfehlers, dargestellt mit einer fetten Linie, sowie den maximalen und minimalen Positionierungsfehler, jeweils dargestellt mit einer dünnen Linie.

Fig. 4 zeigt die geschätzten Knotengeschwindigkeiten. Die obige intermittierende Kurve entspricht dem ersten mobilen Knoten; die anderen darunter liegenden Kurven den anderen Knoten.

Fig. 5 zeigt die geschätzte Transformation des relativen Koordinatensystems in das absolute Koordinatensystem, wobei eine größer werdende Menge von absoluten Positionen zur Referenz, d. h. eine steigende Anzahl von absoluten Referenzpositionen bzw. Paaren von Koordinaten in relativen und absoluten Koordinaten verwendet wurde. Fig. 5a zeigt die Komponenten der Transformationsmatrix $M_t$, Fig. 5b die Komponenten des Verschiebungsvektors $\vec{b_t}$.

Fig. 6 zeigt den Fehler der absoluten Positionierung in Abhängigkeit von der Anzahl von absoluten Positionen zur Referenz bzw. der Anzahl von Positionspaaren. Die Anzahl von Positionspaaren entspricht der Anzahl von gemessenen Positionen, die sowohl in relativen Koordinaten als auch in absoluten Koordinaten bekannt sind. Die Balken in Fig. 6 zeigen die Standardabweichung. Die Statistik deckt 10 verschiedene Knotenanordnungen ab.

Fig. 7 zeigt die freie Dynamik des mittleren Positionierungsfehlers (dicke Linie), sowie den maximalen und minimalen Positionierungsfehler (obere und untere dünne Linien). Dabei wurden in den ersten 200 s 10 Messungen zur Bestimmung der absoluten Position durchgeführt.

## Patentansprüche

1. verfahren zur Bestimmung von Positionsdaten wenigstens eines Knotens (K1) eines Netzwerks, welches eine Mehrzahl von Knoten (K1, ..., Kn) umfasst, wobei das Verfahren folgende Schritte umfasst:

a) Bereitstellen von Positionsdaten, wobei sich die Positionsdaten auf ein internes Koordinatensystem beziehen, für eine Untermenge (U) von Knoten (K3, ..., K6) der Mehrzahl von Knoten (K1, ..., Kn), wobei der wenigstens eine Knoten (K1) nicht in der Untermenge (U) enthalten ist, und wobei die Positionsdaten zumindest die jeweilige Position der Knoten (K3, ..., K6) der Untermenge (U) im internen Koordinatensystem beschreiben;
b) Bestimmung von Entfernungsdaten (D1-3, ..., D1-6) für den wenigstens einen Knoten (K1), wobei die Entfernungsdaten (D1-3, ..., D1-6) jeweils ein Maß für die Entfernung zwischen dem wenigstens einen Knoten (K1) und den jeweiligen Knoten (K3, ..., K6) der Untermenge (U) sind;
c) Bestimmung oder - bei wiederholtem Durchlaufen des Schrittes c) - Korrektur der Positionsdaten des wenigstens einen Knotens (K1) in Abhängigkeit von

- den im Schritt a) bereitgestellten Positionsdaten der Knoten (K3, ..., K6) der Untermenge (U),
- den im Schritt b) bestimmten Entfernungsdaten (D1-3, ..., D1-6) und
- Positionsdaten des wenigstens einen Knotens (K1), wobei die Positionsdaten des wenigstens einen Knotens (K1) beim erstmaligen Durchlaufen des Schrittes c) Initialpositionsdaten und sonst den Positionsdaten des vorherigen Durchlaufs des Schrittes c) entsprechen;

d) Wiederholen der Schritte a) bis c), solange bis ein Abbruchkriterium erfüllt ist.

2. Verfahren gemäß Anspruch 1,
**dadurch gekennzeichnet,**
**dass** das Netzwerk ausschließlich aus mobilen Knoten besteht, deren Position nicht a priori bekannt ist.

3. Verfahren gemäß einem der vorstehenden Ansprüche,
**dadurch gekennzeichnet,**
**dass** die Untermenge (U) von Knoten eine relativ große Anzahl von Knoten aufweist, insbesondere mehr als drei Knoten.

4. Verfahren gemäß einem der vorstehenden Ansprüche,
**dadurch gekennzeichnet,**
**dass** die Positionsdaten jedes Knotens (K3, ..., K6) der Untermenge (U) folgende Informationen enthalten:

- die Position oder die geschätzte Position des jeweiligen Knotens, wobei die geschätzte Position mit dem Verfahren gemäß einem der vorstehenden Ansprüche bestimmt wird,
- ein Maß für die Unsicherheit der Position oder der geschätzten Position des jeweiligen Knotens, insbesondere eine entsprechende Kovarianzmatrix ($A_{x,\tau}$) und/oder
- ein Maß ($D_{x,\tau}$) für die Mobilität des jeweiligen Knotens.

5. Verfahren gemäß Anspruch 4,
**dadurch gekennzeichnet,**
**dass** das Maß ($D_{x,\tau}$) für die Mobilität des jeweiligen Knotens

- eine Diffusionskonstante,
- eine Schätzung des aktuellen Geschwindigkeitsvektors und/oder
- eine geschätzte Bahntrajektorie ist.

6. verfahren gemäß Anspruch 4 oder 5,
**dadurch gekennzeichnet,**
**dass** das Maß ($D_{x,\tau}$) für die Mobilität des Knotens aus vergangenen Beobachtungen, insbesondere der Bewegungen, des jeweiligen Knotens bestimmt wird.

7. Verfahren gemäß einem der vorstehenden Ansprüche,
**dadurch gekennzeichnet,**
**dass** die Entfernung des wenigstens einen Knotens (K1) zu Knoten (K3, ..., K6) der Untermenge (U) im Schritt b)

- mittels Radar, oder
- anhand der Dämpfung eines Funksignals oder
- anhand der Ankunftszeiten, insbesondere eines Ultraschallsignals bestimmt wird.

8. Verfahren gemäß einem der vorstehenden Ansprüche,
**dadurch gekennzeichnet,**

- **dass** das Netzwerk ein Ad-hoc-Funknetz ist, und
- **dass** die Knoten mobile Endgeräte sind.

9. Verfahren gemäß Anspruch 8,
**dadurch gekennzeichnet,**
**dass** die Entfernung des wenigstens einen Knotens (K1) zu Knoten (K3, ..., K6) der Untermenge (U) anhand einer Hop-Distanz bestimmt wird.

10. Verfahren gemäß einem der Ansprüche 1 bis 7,
**dadurch gekennzeichnet,**
**dass** die Knoten (K1, ..., Kn) Feuermeldersensoren, Sensoren oder Aktuatoren einer Produktionsanlage, einer Klimaanlage oder einer Gebäudeüberwachung, oder Sensorknoten eines drahtlosen Sensornetzes sind.

11. Verfahren gemäß einem der vorstehenden Ansprüche,
**dadurch gekennzeichnet,**
**dass** das Verfahren im wesentlichen für alle Knoten (K1, ..., Kn) des Netzwerks durchgeführt wird und so Positionsdaten für im Wesentlichen alle Knoten bestimmt werden, wobei zur Bestimmung der Positionsdaten eines bestimmten Knotens

- jeweils eine eigene Untermenge von Knoten für den bestimmten Knoten bestimmt wird,
- wobei die Knoten der eigenen Untermenge jeweils ihre Positionsdaten an den bestimmten Knoten übertragen,
- wobei der bestimmte Knoten die Entfernungsdaten bestimmt, die jeweils die Entfernung des bestimmten Knotens von einem Knoten der eigenen Untermenge beschreiben.

12. Verfahren gemäß einem der vorstehenden Ansprüche,
**dadurch gekennzeichnet,**
**dass** die Positionsdaten oder die Position des wenigstens einen Knotens (K1) als Zufallsvariable $\vec{\xi}_{i,t}$ modelliert und mittels des Erwartungswertes $\vec{\mu}_{i,t}$ dieser Zufallsvariable $\vec{\xi}_{i,t}$ bestimmt wird.

**13.** Verfahren gemäß Anspruch 12,
**dadurch gekennzeichnet,**
**dass** die Position des wenigstens einen Knotens (K1) mittels einer iterativen Berechnung gemäß folgender iterativer Berechnungsvorschrift ermittelt wird:

$$\vec{\mu}_{i,t}(k+1) = \left[ (A_{i,t-1} + D_{i,t-1})^{-1} + \sum_j (\vec{e}^{\,T}_{i,j,t}(k)\,(A_{j,t-1} + D_{j,t-1} + \sigma_j^2 I)\,\vec{e}_{i,j,t}(k))^{-1} \right]^{-1} \times$$

$$\times \left[ (A_{i,t-1} + D_{i,t-1})^{-1}\vec{\mu}_{i,t-1} + \sum_j (\vec{e}^{\,T}_{i,j,t}(k)\,(A_{j,t-1} + D_{j,t-1} + \sigma_j^2 I)\,\vec{e}_{i,j,t}(k))^{-1} \times \right.$$

$$\left. \times (\vec{\mu}_{j,t-1} + \hat{d}_{i,j,t}\vec{e}_{i,j,t}(k)) \right],$$

mit

$$\vec{e}_{i,j,t}(k) = (\vec{\mu}_{i,t}(k) - \vec{\mu}_{j,t-1}) / |\vec{\mu}_{i,t}(k) - \vec{\mu}_{j,t-1}|,$$

- $A_{x,\tau}$: Kovarianzmatrix des Knotens $x$ zum Zeitpunkt $\tau$,
- $D_{x,\tau}$: Diffusionskonstante des Knotens $x$ zum Zeitpunkt $\tau$ und
- $\mu_{x,\tau}$: Position des Knotens $x$ zum Zeitpunkt $\tau$.
- $d_{x,y,\tau}$: Gemessene Distanz zwischen Knoten $x$ und Knoten $y$ zum Zeitpunkt $\tau$.

**14.** Verfahren gemäß Anspruch 13,
**dadurch gekennzeichnet,**
**dass** der Startwert der iterativen Berechnungsvorschrift wie folgt gewählt wird:

$$\vec{\mu}_{i,t}(0) = \vec{\mu}_{i,t-1}.$$

**15.** Verfahren gemäß einem der vorstehenden Ansprüche,
**dadurch gekennzeichnet,**
**dass** das Abbruchkriterium erfüllt ist, falls der Betrag der Veränderungen der Positionsdaten des wenigstens einen Knotens (K1) seit der letzten Durchführung der Schritte a) bis c) unterhalb eines vorbestimmten Schwellwerts liegt.

**16.** Verfahren gemäß einem der Ansprüche 13 bis 15,
**dadurch gekennzeichnet,**
**dass** die iterative Berechnung abgebrochen wird, falls die absolute Positionsveränderung zwischen zwei aufeinander folgenden Iterationsschritten kleiner als ein vorbestimmter Wert $\varepsilon$ ist, so dass gilt:

$$|\vec{\mu}_{i,t}(k+1) - \vec{\mu}_{i,t}(k)| < \varepsilon.$$

**17.** Verfahren gemäß einem der Ansprüche 13 bis 16,
**dadurch gekennzeichnet,**
**dass** die Kovarianzmatrix $A_{i,t}$ mittels folgender Berechnungsvorschrift berechnet wird:

$$A_{i,t}^{-1} \approx (A_{i,t-1} + D_i)^{-1} + \sum_j \vec{e}_{i,j,t}\,\vec{e}^{\,T}_{i,j,t}\,(\vec{e}^{\,T}_{i,j,t}(A_{j,t-1} + D_j + \sigma_j^2 I)\,\vec{e}_{i,j,t})^{-1},$$

mit

$\vec{e}_{i,j,t}$ : Einheitsvektor in Richtung der Verbindungslinie von Knoten $j$ nach Knoten $i$,
$\sigma_j$: Standardabweichung der Distanzmessung zu Knoten j,

*I*: Identitätsmatrix.

18. Verfahren gemäß einem der Ansprüche 13 bis 17,
    **dadurch gekennzeichnet,**
    **dass** die Diffusionskonstante $D_{x,\tau}$ proportional zur Geschwindigkeit gewählt wird, mit welcher sich der Knoten x bewegt.

19. Verfahren gemäß einem der Ansprüche 13 bis 18,
    **dadurch gekennzeichnet,**
    **dass** die Diffusionskonstante $D_{x,\tau}$ mittels folgender Berechnungsvorschrift bestimmt wird:

$$D_{i,t} = |\vec{v}_{i,t} \Delta t|^2 \, I \, ,$$

mit

$$\vec{v}_{i,t} = \vec{v}_{i,t-1} + \kappa \left( \frac{\vec{\xi}_{i,t} - \vec{\xi}_{i,t-1}}{\Delta t} - \vec{v}_{i,t-1} \right),$$

$\kappa$: Smoothness-Faktor,
$\Delta t$: Zeitintervall zwischen Zeitpunkten t-1 und t,
$\vec{v}_{x,\tau}$: intrinsische Geschwindigkeit des Knotens *x* zum Zeitpunkt $\tau$,
*I*: Identitätsmatrix.

20. Verfahren zur Bestimmung von globalen Positionsdaten für wenigstens einen Knoten (K1) oder für alle Knoten eines Netzwerks, welches eine Mehrzahl von Knoten (K1, ..., Kn) umfasst, wobei sich die globalen Positionsdaten auf ein globales Koordinatensystem beziehen, wobei das Verfahren folgende Schritte umfasst:

    - Bestimmen von relativen Positionsdaten gemäß dem Verfahren nach einem der Ansprüche 1 bis 19 für den wenigstens einen Knoten (K1, ..., Kn) und/oder für im Wesentlichen alle Knoten des Netzwerks,
    - Bestimmen der globalen Positionsdaten in Abhängigkeit von den relativen Positionsdaten mittels einer Transformation.

21. Verfahren gemäß Anspruch 20,
    **dadurch gekennzeichnet,**
    **dass** die Transformation mittels eines linearen Regressionsansatzes bestimmt wird, in Abhängigkeit von einer Mehrzahl von Positionspaaren, wobei ein Positionspaar jeweils Positionsdaten eines Knotens gemäß dem internen Koordinatensystem und globalen Positionsdaten desselben Knotens gemäß dem globalen Koordinatensystem umfasst.

22. Verfahren gemäß Anspruch 21,
    **dadurch gekennzeichnet,**
    **dass** die Positionspaare durch Ankerknoten permanent zur Verfügung stehen.

23. Verfahren gemäß einem der Ansprüche 21 oder 22,
    **dadurch gekennzeichnet,**
    **dass** die Positionspaare durch Positionsmessungen für die jeweiligen Knoten ermittelt werden, wobei die jeweiligen globalen Positionsdaten der jeweiligen Knoten mittels einer Positionsbestimmungseinrichtung, insbesondere einer GPS-Positionsbestimmungseinrichtung, bestimmt werden.

24. Verfahren gemäß einem der Ansprüche 21 bis 23,
    **dadurch gekennzeichnet,**
    **dass** die Positionspaare durch Positionsmessungen ermittelt werden, wobei ein mobiler Knoten seine globalen Positionsdaten zu unterschiedlichen Zeitpunkten anhand einer, insbesondere digitalen Karte bestimmt und so verschiedene Positionspaare bereitgestellt werden.

25. Verfahren gemäß einem der Ansprüche 21 bis 24,
**dadurch gekennzeichnet,**
**dass** die globalen Positionsdaten $\vec{x}_{i,t}$ eines oder mehrerer Knoten des Netzwerks mittels folgender Berechnungsvorschrift bestimmt werden:

$$\vec{x}_{i,t} = M_t \vec{p}_{i,t} + \vec{b}_t$$

mit

$M_t$: Transformationsmatrix zum Zeitpunkt t,
$\vec{b}_t$: Verschiebungsvektor zum Zeitpunkt t.

26. Verfahren gemäß Anspruch 25,
**dadurch gekennzeichnet,**
**dass** die Transformationsmatrix $M_t$ mittels folgender Berechnungsvorschrift bestimmt wird:

$$M_t = \sum_m (\hat{\vec{x}}_m - <\hat{\vec{x}}_m>) \vec{\mu}_m^T \left( \sum_m (\vec{\mu}_m - <\vec{\mu}_m>) \vec{\mu}_m^T \right)^{-1}.$$

mit

$\hat{\vec{x}}_m$ : Globaler Positionsvektor,

$<\hat{\vec{x}}_m>$: Mittelwert über alle globalen Positionsvektoren der Positionspaare,
$<\vec{\mu}_m>$: Mittelwert über alle relativen Positionsvektoren der Positionspaare.

27. Verfahren nach Anspruch 25 oder 26,
**dadurch gekennzeichnet,**
**dass** der Verschiebungsvektor $\vec{b}_t$ mittels folgender Berechnungsvorschrift bestimmt wird:

$$\vec{b}_t = <\hat{x}_m> - M_t <\vec{\mu}_m>.$$

28. Verfahren gemäß einem der Ansprüche 21 bis 27,
**dadurch gekennzeichnet,**
**dass** mindestens vier Positionspaare bestimmt werden.

**Claims**

1. Method for determining positional data of at least one node (K1) of a network that includes a plurality of nodes (K1, ..., Kn), with the method including the following steps:

   a) Provision of positional data, with the positional data referring to an internal coordinate system for a subset (U) of nodes (K3, ..., K6) of the plurality of nodes (K1 ..., Kn), with the at least one node (K1) not being included in the subset (U) and with the positional data describing at least the respective position of the nodes (K3, ..., K6) of the subset (U) in the internal coordinate system;
   b) Determination of separation data (D1-3, ..., D1-6) for the at least one node (K1), with the separation data (D1-3, ..., D1-6) being a measure of the distance between the at least one node (K1) and the respective nodes (K3, ..., K6) of the subset (U) ;
   c) Determination or, on repetition of step c), correction of the positional data of the at least one node (K1) depending on

      - the positional data of the nodes (K3, ..., K6) of the subset (U) provided in step a),
      - the separation data (D1-3, ..., D1-6) determined in step b) and

- positional data of the at least one node (K1), with the positional data of the at least one node (K1) corresponding during the initial performance of step c) to the initial positional data and otherwise to the positional data of the previous performance of step c);

d) Repetition of steps a) to c) until an interruption condition is fulfilled.

2. Method according to claim 1,
**characterised in that**
the network consists exclusively of mobile nodes, the position of which is not known a priori.

3. Method according to one of the preceding claims, **characterised in that**
the subset (U) of nodes has a relatively large number of nodes, especially more than three nodes.

4. Method according to one of the preceding claims, **characterised in that**
the positional data of each node (K3, ..., K6) of the subset (U) contains the following information:

- The position or the estimated position of the respective node, with the estimated position being determined by the method according to one of the preceding claims,
- A measure of the uncertainty of the position or the estimated position of the respective node, especially a corresponding covariance matrix ($A_{x,\tau}$) and/or
- a measure ($D_{x,\tau}$) of the mobility of the respective node.

5. Method according to claim 4,
**characterised in that**
the measure ($D_{x,\tau}$) of the mobility of the respective node is

- a diffusion constant,
- an estimation of the actual speed vector and/or
- an estimated trajectory.

6. Method according to claim 4 or 5,
**characterised in that**
the measure ($D_{x,\tau}$) of the mobility of the node is determined from previous observations, especially the movements, of the respective node.

7. Method according to one of the preceding claims, **characterised in that**
the distance of the at least one node (K1) from nodes (K3, ..., K6) of the subset (U) is determined in step b)

- by means of radar, or
- by using the attenuation of a radio signal or
- by using the arrival times, especially of an ultrasound signal.

8. Method according to one of the preceding claims, **characterised in that**

- the network is an ad-hoc radio network, and
- the nodes are mobile terminals.

9. Method according to claim 8,
**characterised in that**
the distance of the at least one node (K1) from nodes (K3, ..., K6) of the subset (U) is determined by means of a hop distance.

10. Method according to one of claims 1 to 7,
**characterised in that**
the nodes (K1, ..., Kn) are fire alarm sensors, sensors or actuators of a production system, of an air conditioning system or of a building monitoring system, or sensor nodes of a wireless sensor network.

11. Method according to one of the preceding claims,

**characterised in that**
the method is essentially carried out for all nodes (K1, ..., Kn) of the network and positional data is thus determined essentially for all nodes, with, for determination of the positional data of a specific node,

- an own subset of nodes being determined in each case for the specific node,
- with the nodes of the own subset each transmitting their position data to the specific node,
- with the specific nodes determining the separation data that in each case describes the distance of the specific node from a node of the own subset.

12. Method according to one of the preceding claims, **characterised in that**
the positional data or the position of the at least one node (K1) is modelled as a random variable $\vec{\xi}_{i,t}$ and is determined by means of the expected value $\vec{\mu}_{i,t}$ of this random variable $\vec{\xi}_{i,t}$.

13. Method according to claim 12,
**characterised in that**
the position of the at least one node (K1) is determined by means of an iterative calculation in accordance with the following iterative calculation rule:

$$\vec{\mu}_{i,t}(k+1) = \left[ (A_{i,t-1} + D_{i,t-1})^{-1} + \sum_j (\vec{e}^T_{i,j,t}(k)(A_{j,t-1} + D_{j,t-1} + \sigma^2_j I)\,\vec{e}_{i,j,t}(k))^{-1} \right]^{-1} \times$$

$$\times \left[ (A_{i,t-1} + D_{i,t-1})^{-1} \vec{\mu}_{i,t-1} + \sum_j (\vec{e}^T_{i,j,t}(k)(A_{j,t-1} + D_{j,t-1} + \sigma^2_j 1)\,\vec{e}_{i,j,t}(k))^{-1} \times \right.$$

$$\left. \times (\vec{\mu}_{j,t-1} + \hat{d}_{i,j,t}\,\vec{e}_{i,j,t}(k)) \right],$$

where

$$\vec{e}_{i,j,t}(k) = (\vec{\mu}_{i,t}(k) - \vec{\mu}_{j,t-1}) / |\vec{\mu}_{i,t}(k) - \vec{\mu}_{j,t-1}|,$$

- $A_{x,\tau}$: Covariance matrix of the node $x$ at timepoint $\tau$,
- $D_{x,\tau}$: Diffusion constant of the node $x$ at timepoint $\tau$ and
- $\mu_{x,\tau}$: Position of the node $x$ at timepoint $\tau$.
- $d_{x,y,\tau}$: Measured distance between node x and node y at timepoint $\tau$.

14. Method according to claim 13,
**characterised in that**
the starting value of the iterative calculation rule is chosen as follows:

$$\vec{\mu}_{i,t}(0) = \vec{\mu}_{i,t-1}.$$

15. Method according to one of the preceding claims, **characterised in that**
the interruption criterion is fulfilled if the amount of the changes of the positional data of the at least one node (K1) since the last performance of steps a) to c) is less than a predetermined threshold value.

16. Method according to one of claims 13 to 15,
**characterised in that**
the iterative calculation is interrupted if the absolute position change between two successive iteration steps is less than a predetermined value $\varepsilon$ so that the following applies:

$$|\,\vec{\mu}_{i,t}(k+1)-\vec{\mu}_{i,t}(k)\,|<\varepsilon\ .$$

**17.** Method according to one of claims 13 to 16, **characterised in that**
the covariance matrix $A_{i,t}$ is calculated by means of the following calculation rule:

$$A_{i,t}^{-1} \approx (A_{i,t-1}+D_i)^{-1}+\sum_{j}\vec{e}_{i,j,t}\,\vec{e}_{i,j,t}^{T}\,(\vec{e}_{i,j,t}^{T}\,(A_{j,t-1}+D_j+\sigma_j^2 I)\,\vec{e}_{i,j,t})^{-1}\ ,$$

where

$\vec{e}_{i,j,t}$: Unit vector in the direction of the line connecting node $j$ to node $i$,
$\sigma_j$: Standard deviation of the distance measurement to node j,
$I$: Identity matrix.

**18.** Method according to one of claims 13 to 17,
**characterised in that**
the diffusion constant $D_{x,\tau}$ chosen is proportional to the speed at which the node $x$ moves.

**19.** Method according to one of claims 13 to 18,
**characterised in that**
the diffusion constant $D_{x,\tau}$ is determined according to the following calculation rule:

$$D_{i,t}=|\,\vec{v}_{i,t}\Delta t\,|^2\,I\ ,$$

where

$$\vec{v}_{i,t}=\vec{v}_{i,t-1}+\kappa\left(\frac{\vec{\xi}_{i,t}-\vec{\xi}_{i,t-1}}{\Delta t}-\vec{v}_{i,t-1}\right),$$

$\kappa$: Smoothness factor,
$\Delta t$: Time interval between timepoints t-1 and t,
$\vec{v}_{x,\tau}$: Intrinsic speed of the node $x$ at timepoint $\tau$,
$I$: Identity matrix.

**20.** A method for determining global positional data for the at least one node (K1) or for all nodes of a network that includes a plurality of nodes (K1, ..., Kn), with the global positional data referring to a global coordinate system, with the method including the following steps:

- Determination of relative positional data according to the method according to one of claims 1 to 19 for the at least one node (K1, ..., Kn) and/or for essentially all nodes of the network,
- Determination of the global positional data depending on the relative positional data by means of a transformation.

**21.** Method according to claim 20,
**characterised in that**
the transformation is determined by means of a linear regression approach, depending on a plurality of position pairs, with a position pair in each case including positional data of a node according to the internal coordinate system and global positional data of the same node according to the global coordinate system.

**22.** Method according to claim 21,
**characterised in that**
the position pairs are permanently available due to anchor nodes.

**23.** Method according to one of claims 21 or 22, **characterised in that**
the position pairs are determined by position measurements for the respective nodes, with the respective global positional data of the respective nodes being determined by means of a position determining device, especially a GPS position determining device.

**24.** Method according to one of claims 21 to 23, **characterised in that**
the position pairs are determined by position measurements, with a mobile node determining its global positional data at different timepoints by means of a map, especially a digital one, and thus providing various position pairs.

**25.** Method according to one of claims 21 to 24, **characterised in that**,
the global positional data $\vec{x}_{i,t}$ of one or more nodes of the network is determined by means of the following calculation rule:

$$\vec{x}_{i,t} = M_t \vec{\mu}_{i,t} + \vec{b}_t$$

where

$M_t$: Transformation matrix at timepoint t,
$\vec{b}_t$: Displacement vector at timepoint t.

**26.** Method according to claim 25,
**characterised in that**
the transformation matrix $M_t$ is determined by means of the following calculation rule:

$$M_t = \sum_m (\hat{\vec{x}}_m - <\hat{\vec{x}}_m>) \vec{\mu}_m^T \left( \sum_m (\vec{\mu}_m - <\vec{\mu}_m>) \vec{\mu}_m^T \right)^{-1} .$$

where

$\hat{\vec{x}}_m$ : Global position vector,

$<\hat{\vec{x}}_m>$: Average value of all the global position vectors of the position pairs,
$<\vec{\mu}_m>$: Average value of all the relative position vectors of the position pairs.

**27.** Method according to claim 25 or 26,
**characterised in that**
the displacement vector $\vec{b}_t$ is determined by means of the following calculation rule:

$$\vec{b}_t = <\hat{\vec{x}}_m> - M_t <\vec{\mu}_m> .$$

**28.** Method according to one of claims 21 to 27, **characterised in that**
at least four position pairs are determined.

**Revendications**

**1.** Procédé pour déterminer des données de position d'au moins un noeud (K1) d'un réseau comportant une pluralité de noeuds (K1, ..., Kn), le procédé comprenant les étapes suivantes :

a) fournir des données de position, les données de position se rapportant à un système de coordonnées interne, pour un sous-ensemble (U) de noeuds (K3, ..., K6) de la pluralité de noeuds (K1, ..., Kn), le au moins un noeud (K1) n'étant pas compris dans le sous-ensemble (U), et les données de position décrivant au moins la position respective des noeuds (K3, ..., K6) du sous-ensemble (U) dans le système de coordonnées interne ;

b) déterminer des données de distance (D1-3, ..., D1-6) pour le au moins un noeud (K1), les données de distance (D1-3, ..., D1-6) étant à chaque fois une mesure de la distance entre le au moins un noeud (K1) et les noeuds respectives (K3, ..., K6) du sous-ensemble (U) ;

c) déterminer ou - en cas d'exécution répétée de l'étape c) - corriger les données de position du au moins un noeud (K1) en fonction

- des données de position fournies à l'étape a) des noeuds (K3, ..., K6) du sous-ensemble (U),
- des données de distance (D1-3, ..., D1-6) déterminées à l'étape b) et
- de données de position du au moins un noeud (K1), les données de position du au moins un noeud (K1) correspondant à des données de position initiales dans le cas d'une première exécution de l'étape c) et sinon aux données de position de l'exécution précédente de l'étape c) ;

d) répéter les étapes a) à c) jusqu'à ce qu'un critère d'abandon soit rempli.

2. Procédé selon la revendication 1,
**caractérisé en ce que**
le réseau est constitué exclusivement de noeuds mobiles dont la position n'est a priori pas connue.

3. Procédé selon l'une des revendications précédentes, **caractérisé en ce que**
le sous-ensemble (U) de noeuds comporte un nombre relativement important de noeuds, en particulier plus de trois noeuds.

4. Procédé selon l'une des revendications précédentes, **caractérisé en ce que**
les données de position de chaque noeud (K3, ..., K6) du sous-ensemble (U) comportent les informations suivantes :

- la position ou la position estimée du noeud respectif, la position estimée étant déterminée à l'aide du procédé selon l'une des revendications précédentes,
- une mesure de l'incertitude de la position ou de la position estimée du noeud respectif, en particulier une matrice de covariance correspondante ($A_{x,\tau}$) et/ou
- une mesure ($D_{x,\tau}$) de la mobilité du noeud respectif.

5. Procédé selon la revendication 4,
**caractérisé en ce que**
la mesure ($D_{x,\tau}$) de la mobilité du noeud respectif est

- une constante de diffusion,
- une estimation du vecteur de vitesse actuel et/ou
- une trajectoire estimée.

6. Procédé selon la revendication 4 ou 5,
**caractérisé en ce que**
la mesure ($D_{x,\tau}$) de la mobilité du noeud est déterminée à partir d'observations passées, en particulier des mouvements, du noeud respectif.

7. Procédé selon l'une des revendications précédentes, **caractérisé en ce que**
la distance du au moins un noeud (K1) par rapport aux noeuds (K3, ..., K6) du sous-ensemble (U) est déterminée à l'étape b)

- au moyen d'un radar, ou
- à l'aide de l'atténuation d'un signal radio ou
- à l'aide des temps d'arrivée notamment d'un signal ultrasonore.

8. Procédé selon l'une des revendications précédentes, **caractérisé en ce que**

- le réseau est un réseau ad hoc, et
- les noeuds sont des terminaux mobiles.

9. Procédé selon la revendication 8,

**caractérisé en ce que**
la distance du au moins un noeud (K1) par rapport aux noeuds (K3, ..., K6) du sous-ensemble (U) est déterminée à l'aide d'une distance de saut.

10. Procédé selon l'une des revendications 1 à 7,
**caractérisé en ce que**
les noeuds (K1, ..., Kn) sont des capteurs de détecteur d'incendie, des capteurs ou actionneurs d'une installation de production, d'une climatisation ou d'une surveillance de bâtiment, ou des noeuds de capteurs d'un réseau de capteurs sans fil.

11. Procédé selon l'une des revendications précédentes, **caractérisé en ce que**
le procédé étant mis en oeuvre pour quasiment tous les noeuds (K1, ..., Kn) du réseau, des données de position sont ainsi déterminées pour quasiment tous les noeuds, sachant que pour déterminer les données de position d'un noeud spécifique

  - un propre sous-ensemble de noeuds est déterminé pour le noeud spécifique,
  - chaque noeud du propre sous-ensemble transmettant ses données de position au noeud spécifique,
  - le noeud spécifique déterminant les données de distance qui décrivent à chaque fois la distance du noeud spécifique par rapport à un noeud du propre sous-ensemble.

12. Procédé selon l'une des revendications précédentes, **caractérisé en ce que**
les données de position ou la position du au moins un noeud (K1) est modélisée sous forme de variable aléatoire $\vec{\xi}_{i,t}$ et déterminée à l'aide de la valeur escomptée $\vec{\mu}_{i,t}$ de cette variable aléatoire $\vec{\xi}_{i,t}$.

13. Procédé selon la revendication 12,
**caractérisé en ce que**
la position du au moins un noeud (K1) est déterminée à l'aide d'un calcul itératif selon la règle de calcul itératif suivante :

$$\vec{\mu}_{i,t}(k+1) = \left[ (A_{i,t-1} + D_{i,t-1})^{-1} + \sum_j (\vec{e}^T_{i,j,t}(k)(A_{j,t-1} + D_{j,t-1} + \sigma^2_j I)\vec{e}_{i,j,t}(k))^{-1} \right]^{-1} \times$$

$$\times \left[ (A_{i,t-1} + D_{i,t-1})^{-1} \vec{\mu}_{i,t-1} + \sum_j (\vec{e}^T_{i,j,t}(k)(A_{j,t-1} + D_{j,t-1} + \sigma^2_j 1)\vec{e}_{i,j,t}(k))^{-1} \times \right.$$

$$\left. \times (\vec{\mu}_{j,t-1} + \hat{d}_{i,j,t}\vec{e}_{i,j,t}(k)) \right],$$

avec

$$\vec{e}_{i,j,t}(k) = (\vec{\mu}_{i,t}(k) - \vec{\mu}_{j,t-1})/|\vec{\mu}_{i,t}(k) - \vec{\mu}_{j,t-1}|,$$

  - $A_{x,\tau}$: matrice de covariance du noeud $x$ au moment $\tau$,
  - $D_{x,\tau}$: constante de diffusion du noeud $x$ au moment $\tau$ et
  - $\mu_{x,\tau}$: position du noeud $x$ au moment $\tau$.
  - $d_{x,y,\tau}$: distance mesurée entre noeud x et noeud y au moment $\tau$.

14. Procédé selon la revendication 13,
**caractérisé en ce que**

la valeur initiale de la règle de calcul itératif est choisie comme suit :

$$\vec{\mu}_{i,t}(0) = \vec{\mu}_{i,t-1} \ .$$

15. Procédé selon l'une des revendications précédentes, **caractérisé en ce que**
le critère d'abandon est rempli si la valeur des modifications des données de position du au moins un noeud (K1) depuis la dernière exécution des étapes a) à c) est inférieure à une valeur de seuil prédéterminée.

16. Procédé selon l'une des revendications 13 à 15,
**caractérisé en ce que**
le calcul itératif est abandonné si la modification de position absolue entre deux étapes d'itération consécutives est inférieure à une valeur prédéterminée e telle que

$$| \vec{\mu}_{i,t}(k+1) - \vec{\mu}_{i,t}(k) | < \varepsilon \ .$$

17. Procédé selon l'une des revendications 13 à 16,
**caractérisé en ce que**
la matrice de covariance $A_{i,t}$ est calculée à l'aide de la règle de calcul suivante :

$$A_{i,t}^{-1} \approx (A_{i,t-1} + D_i)^{-1} + \sum_j \vec{e}_{i,j,t} \ \vec{e}_{i,j,t}^T \ (\vec{e}_{i,j,t}^T (A_{j,t-1} + D_j + \sigma_j^2 I) \ \vec{e}_{i,j,t})^{-1}$$

avec

$\vec{e}_{i,j,t}$ : vecteur unitaire en direction de la ligne de jonction allant du noeud $j$ au noeud $i$,
$\sigma_j$: écart type de la mesure de distance par rapport au noeud j,
$I$: matrice d'identité.

18. Procédé selon l'une des revendications 13 à 17,
**caractérisé en ce que**
la constante de diffusion $D_{x,\tau}$ est choisie proportionnelle à la vitesse à laquelle le noeud $x$ se déplace.

19. Procédé selon l'une des revendications 13 à 18,
**caractérisé en ce que**
la constante de diffusion $D_{x,\tau}$ est déterminée à l'aide de la règle de calcul suivante :

$$D_{i,t} = | \vec{v}_{i,t} \Delta t |^2 \ I \ ,$$

avec

$$\vec{v}_{i,t} = \vec{v}_{i,t-1} + \kappa \left( \frac{\vec{\xi}_{i,t} - \vec{\xi}_{i,t-1}}{\Delta t} - \vec{v}_{i,t-1} \right) ,$$

$\kappa$: facteur de lissage
$\Delta t$: intervalle de temps entre les moments t-1 et t,
$\vec{v}_{x,\tau}$: vitesse intrinsèque du noeud $x$ au moment $\tau$,
$I$: matrice d'identité.

20. Procédé pour déterminer des données de position globales pour au moins un noeud (K1) ou pour tous les noeuds d'un réseau comportant une pluralité de noeuds (K1, ..., Kn), les données de position globales se rapportant à un système de coordonnées global, le procédé comprenant les étapes suivantes :

- déterminer des données de position globales conformément au procédé selon l'une des revendications 1 à 19 pour le au moins noeud (K1, ..., Kn) et/ou pour quasiment tous les noeuds du réseau,
- déterminer les données de position globales en fonction des données de position relatives à l'aide d'une transformation.

21. Procédé selon la revendication 20,
**caractérisé en ce que**
la transformation est déterminée au moyen d'une approche de type régression linéaire, en fonction d'une pluralité de paires de positions, une paire de positions comprenant à chaque fois des données de position d'un noeud selon le système de coordonnées interne et des données de position globales du même noeud selon le système de coordonnées global.

22. Procédé selon la revendication 21,
**caractérisé en ce que**
les paires de positions sont disponibles en permanence grâce à des noeuds d'ancre.

23. Procédé selon l'une des revendications 21 ou 22,
**caractérisé en ce que**
les paires de positions sont déterminées par des mesures de position pour les noeuds respectifs, les données de position globales respectives des noeuds respectifs étant déterminées au moyen d'un dispositif de localisation, en particulier d'un dispositif de localisation GPS.

24. Procédé selon l'une des revendications 21 à 23,
**caractérisé en ce que**
les paires de positions sont déterminées par des mesures de position, un noeud mobile déterminant ses données de position globales à différents moments à l'aide d'une carte notamment numérique, permettant ainsi de fournir différentes paires de positions.

25. Procédé selon l'une des revendications 21 à 24,
**caractérisé en ce que**
les données de position globales $\overline{x}_{i,t}$ d'un ou de plusieurs noeuds du réseau sont déterminées au moyen de la règle de calcul suivante :

$$\vec{x}_{i,t} = M_t \vec{\mu}_{i,t} + \vec{b}_t$$

avec

$M_t$ : matrice de transformation au moment t,
$\vec{b}_t$ : vecteur de déplacement au moment t.

26. Procédé selon la revendication 25,
**caractérisé en ce que**
la matrice de transformation $M_t$ est déterminée à l'aide de la règle de calcul suivante :

$$M_t = \sum_m (\hat{\vec{x}}_m - <\hat{\vec{x}}_m>) \vec{\mu}_m^T \left( \sum_m (\vec{\mu}_m - <\vec{\mu}_m>) \vec{\mu}_m^T \right)^{-1},$$

avec

$\hat{\vec{x}}_m$ : vecteur de position globale,

$<\hat{\vec{x}}_m>$ : valeur moyenne de tous les vecteurs de position globale des paires de positions,
$<\vec{\mu}_m>$ : valeur moyenne de tous les vecteurs de position relative des paires de positions.

**27.** Procédé selon la revendication 25 ou 26,
**caractérisé en ce que** le vecteur de déplacement $\vec{b}_t$ est déterminé à l'aide de la règle de calcul suivante :

$$\vec{b}_t = <\hat{\vec{x}}_m> - M_t <\vec{\mu}_m> \; .$$

**28.** Procédé selon l'une des revendications 21 à 27,
**caractérisé en ce que**
au moins quatre paires de positions sont déterminées.

FIG 1

# FIG 2

## FIG 3

EP 1 751 579 B1

FIG 4

EP 1 751 579 B1

## FIG 5A

## FIG 5B

FIG 6

# FIG 7

EP 1 751 579 B1

FIG 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **VON CAPKUN et al.** GPS Free Positioning System. Swiss Federal Institute of Technology

- Recursive Position Estimation in Sensor Networks. **VON ALBOWICZ et al.** ICNP. IEEE, 2001